# EUROPEAN PATENT APPLICATION

(11) **EP 4 790 919 A1**
(43) Date of publication of application: **12.08.2026**
(21) Application number: 25156383.9
(22) Date of filing: 06.02.2025
(51) Int. Cl.: H04B 7/185, H04B 7/204

(54) **DELIVERY TIME AND STORAGE STATUS SIGNALLING FOR NTN**

(71) Applicant: Panasonic Intellectual Property Corporation of America, Torrance, CA 90504 (US)
(72) Inventor: HERRMANN, Frank, 63225 Langen (DE); NISHIO, Akihiko, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

An embodiment relates to system information for supporting non-terrestrial network operation. The system information includes at least one of: a) a delivery time information indicating a time interval that includes at least time required until data transmitted from the communication device via the base station are conveyed to a terrestrial gateway, and b) a storage status information indicating capacity available in a storage of the base station for storing the data from the communication device. Methods and apparatuses capable of generating and transmitting as well as methods and apparatuses capable of receiving and parsing said system information are provided.

## Description

### 1. Technical Field

The present disclosure relates to transmission of system information relating to a non-terrestrial network. In particular, the present invention relates to apparatuses and methods that generate, signal, receive, and/or utilize the system information relating to a non-terrestrial network.

### 2. Description of the Related Art

The 3rd Generation Partnership Project (3GPP) has worked on the technical specifications for the Long Term Evolution (LTE) of the fourth generation (4G) and on fifth generation (5G) cellular technology, which is also called new radio (NR).

One objective in NR is to provide a single technical framework addressing all usage scenarios, requirements and deployment scenarios, at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 4G and 5G is the introduction of non-terrestrial networks (NTN) including a satellite in the communication path between a user device and a network. Thanks to the wide service coverage capabilities and reduced vulnerability of space or airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability. Further improvements of the NTN are desirable in order to increase coverage and efficiency of the communications system.

### SUMMARY

One non-limiting and exemplary embodiment facilitates efficient signalling in non-terrestrial networks.

In an embodiment, the techniques disclosed herein feature a communication device for communication with a non-terrestrial network, NTN, the communication device comprising: a transceiver which, in operation, receives a system information from a base station, of the NTN; circuitry which, in operation: extracts, from the system information for a predetermined illumination area, at least one of: a delivery time information indicating a time interval that includes at least time required until data transmitted from the communication device via the base station are conveyed to a terrestrial gateway, and a storage status information indicating capacity available in a storage of the base station for storing the data from the communication device; and controls the transceiver regarding the transmission of the data from the communication device to the base station according to the extracted delivery time information and/or the storage status information.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: is a block diagram that shows an exemplary architecture for a 3GPP NR system.
- **Fig. 2**: is a block diagram that shows a functional split between NG-RAN and 5GC.
- **Fig. 3**: is a message sequence diagram for RRC connection setup/reconfiguration procedures.
- **Fig. 4**: is a schematic drawing showing usage scenarios of Enhanced mobile broadband (eMBB), Massive Machine Type Communications (mMTC) and Ultra Reliable and Low Latency Communications (URLLC).
- **Fig. 5**: is a block diagram showing an exemplary 5G system architecture for a non-roaming scenario.
- **Fig. 6**: is a block diagram that illustrates an exemplary scenario where several UEs are served by a satellite.
- **Fig. 7**: is a block diagram that illustrates an exemplary architecture of a system with satellite born base station.
- **Fig. 8**: is a schematic drawing that illustrates store and forward approach with satellites carrying base station illuminating areas on the Earth with four beams.
- **Fig. 9**: is a schematic drawing that illustrates store and forward approach with a service ling and a feeder link.
- **Fig. 10**: is a schematic drawing that illustrating a satellite-born base station with multiple beams illuminating a coverage area on the Earth.
- **Fig. 11**: is a schematic drawing illustrating a satellite-born base station with multiple beams for illuminating a coverage area on the Earth with 3 beams actually illuminating an area.
- **Fig. 12**: is a block diagram of an exemplary structure of devices in an exemplary communication system.
- **Fig. 13**: is a block diagram showing a exemplary functional modules of a base station and a communication device in the system of Fig. 12.
- **Fig. 14**: is a flow diagram illustrating methods performed by a communication device and the base station according to a first embodiment.
- **Fig. 15**: is a block diagram showing a exemplary functional modules of a base station and a communication device in the system of Fig. 12.
- **Fig. 16**: is a flow diagram illustrating methods performed by a communication device and the base station according to a second embodiment..

### DETAILED DESCRIPTION

### Overview of 5G NR system architecture and protocol stacks

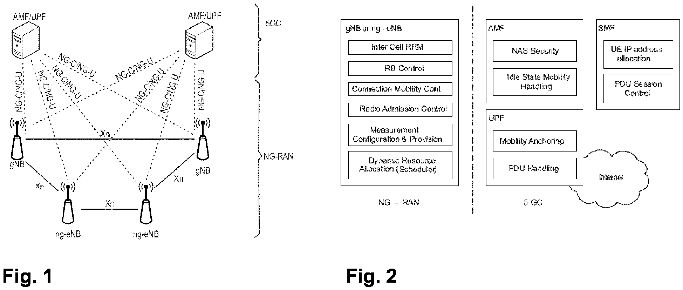

Among other things, the overall system architecture assumes an NG-RAN (Next Generation - Radio Access Network) that comprises gNBs (corresponding to eNBs in 4G), providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. This protocol stack is similar to 4G. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

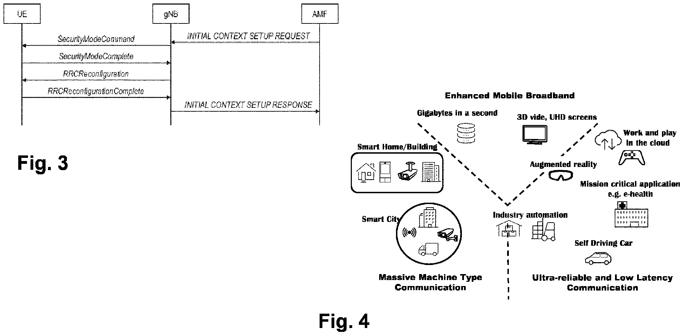

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signalling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signalling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNB, and a transmitter which, in operation, transmits an initial context setup message, via the NG connection, to the gNB to cause a signalling radio bearer setup between the gNB and a user equipment (UE). In particular, the gNB transmits a Radio Resource Control, RRC, signalling containing a resource allocation configuration information element (IE) to the UE via the signalling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

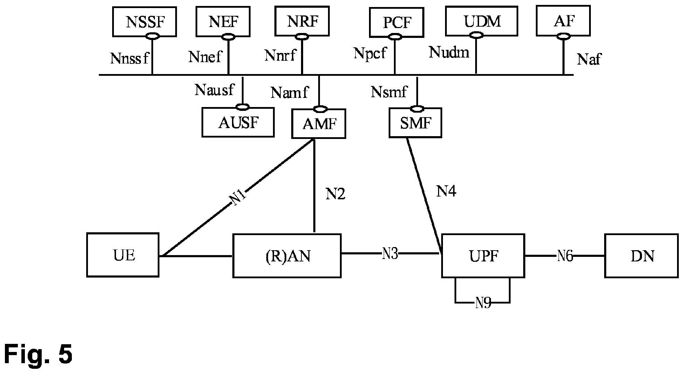

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

### System information transmission

System information is downlink broadcast information transmitted by a base station (gNB in 5G, eNB in 4G, in general a network node). It includes information for a UE to establish connection with the base station. In 4G and 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcast) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

### Non-Terrestrial Networks, NTN

A non-terrestrial network refers to a network, or segment of a network using RF resources on board of an airborne or space-borne entity for transmission. Space-borne vehicles are for instance satellites (including Low Earth Orbiting (LEO) satellites, Medium Earth Orbiting (MEO) satellites, Geostationary Earth Orbiting (GEO) satellites as well as Highly Elliptical Orbiting (HEO) satellites). Airborne vehicles are for instance High Altitude Platforms (HAPs) encompassing Unmanned Aircraft Systems/Vehicles (UAS/UAV) including Lighter than Air UAS (LTA), Heavier than Air UAS (HTA), all operating in altitudes typically between 8 and 50 km, quasi-stationary.

In 3GPP, NR-based operation in a non-terrestrial network (NTN) is studied and described (see e.g. 3GPP TR 38.811, "Study on New Radio (NR) to support non-terrestrial networks", version 15.4.0, and 3GPP TR 38.821, "Solutions for NR to support non-terrestrial networks", version 16.1.0).

NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

The platform can implement either transparent or regenerative payload transmissions. In the transparent payload, the platform acts as a repeater by filtering, converting, and amplifying the wave signal, while the payload is unchanged. In the regenerative payload, the platform has some or all of the base station functionalities. It may perform demodulation/modulation, switching/routing, coding/decoding in addition to radio frequency filtering, conversion and amplification. The Inter-satellite links (ISL) can optionally be used to form a constellation of satellites. ISL (Inter-Satellite Links) is a transport link between satellites.

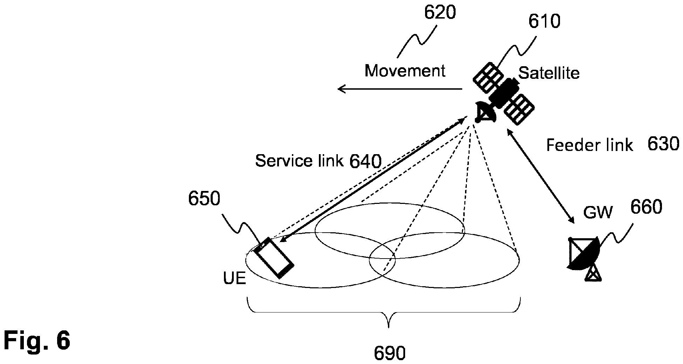

An NTN scenario that provides cells which are continuously moving on the Earth (e.g. a LEO, MEO, or HEO based NTN), is referred to as an Earth moving cell scenario. The continuous cell motion on the Earth is due to the operation where the satellite beam is fixed with respect to the NTN platform. Therefore, the footprint of the cell, which may correspond to several satellite beams or one satellite beam, slides on the Earth surface with the motion of the NTN platform (e.g. a LEO satellite). This is illustrated in **Fig. 6****.** A satellite 610 moves (illustrated by the movement arrow 620), e.g. with a velocity of 7.6 km/s. It may provide one or more beams (sometimes also referred to as cells) 690. There is a service link 640 between a UE 650 and the satellite 610. System information, and, in particular, a system information block (SIB) carries NTN information, sometimes referred to as NTN-SIB. In Release 16, SIB19 carries NTN-information in 3GPP NTN-NR. The system information is broadcast by the satellite 610. The present disclosure is not limited to any particular network configuration. In some communication systems that may still profit from the present disclosure, the satellite may be controlled to broadcast the system information by the gNB 660, eNB, or another network node.

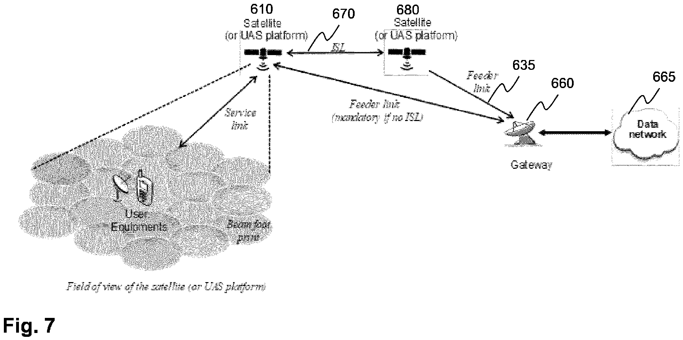

**Fig. 7** shows a more comprehensive example of an NTN system. In particular, in this system, inter-satellite links are possible. Accordingly, the UEs have a service link with a first satellite 610, which is connected via an inter-satellite link (ISL) 670 to a second satellite 680. The second satellite 680 has a feeder link to a terrestrial gateway 660 connected to a network 665. It is noted that there is a possibility of a chain of a plurality of ISLs and respective satellites involved.

ISLs do not need to bridge the entire route between UE and the terrestrial gateway, but they can also provide storage sharing, i.e. instead of being restricted to the storage space on the first satellite, the combined storage space of n (n being integer greater than 0) satellites being connected via ISLs could be shared for S&F purposes.

### NTN-IoT and Store-and-Forward (S&F)

A Store & Forward (S&F) scenario belongs to the regenerative payload branch of IoT-NTN, i.e. the LTE-based, loT-related satellite communication approach of 3GPP. It may be relevant for 4G as well as for 5G or the like. A corresponding standardisation project has been mandated for 4G with the work Item aiming at support of Store&Forward (S&F) satellite operation with full eNB as regenerative payload. Thus, it is desired to define the necessary enhancements into E-UTRAN (network & UE) to support S&F operation for delay-tolerant services [RAN3, RAN2, RAN4]. Furthermore, enhancements should be specified e.g. related to S1 protocol, especially to address the feeder link switch over as needed [RAN3]. It has been preferred to minimize UE impact.

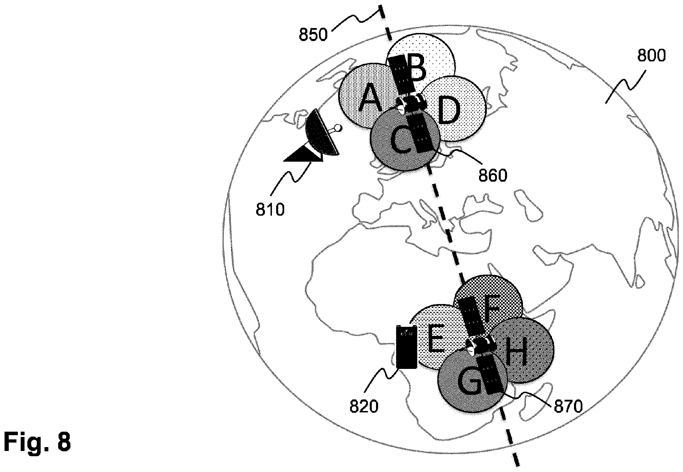

A core element of the S&F approach is an intermittent service link connection between a UE and satellites possibly in sparsely populated orbits (incl. the case of just one satellite in a single orbit or several satellites in the orbit) as well as an also intermittent feeder link connection between the satellites and the few gateways on the ground. This scenario is illustrated in Fig. 8. Specifically, Fig. 8 shows the Earth 800 and an orbit 850 with two satellites 860 and 870 on the orbit 850. A first satellite 860 generates four beams A, B, C, and D that illuminate the corresponding areas on the Earth. A second satellite 870 generates four beams E, F, G, and H that illuminate the corresponding areas on the Earth. An NTN-loT UE 820 may be in coverage (i.e. located in the illuminated area) of the second satellite 870, whereas a gateway 810 may be in coverage of the first satellite 860. When referring to "satellite" in this regard, a base station located on the satellite and communicating with the gateway and the UE. For S&F scenario it is assumed that feeder and service links never exist at the same time for one base station.

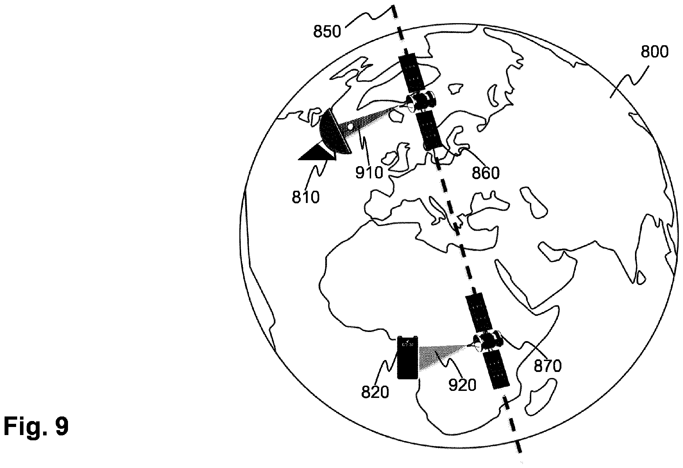

An option exists for satellites to switch between S&F mode and real-time mode (the latter is characterized by continuously present feeder and service links). Service link 920 (to the UE 820) and feeder link 910 (to the gateway 810) are illustrated in **Fig. 9****.**

It has been agreed that the S&F implies that at least the full eNB will be onboard of the satellite. An IoT-NTN network shall be able to inform UE(s) whether S&F satellite operation is applied. The S&F satellite operation is common for NB-loT (narrow-band loT) and eMTC (enhanced machine-type communication). The S&F satellite operation is applied to both CP (control plane) solution and UP (user plane) solution. For the uplink/downlink messages transmission for MO (mobile originating traffic), from RAN2 perspective the following steps are taken as baseline for S&F satellite operation (in case only eNB is on the satellite):
- The UE sends uplink data signalling to eNB when service link is available and the eNB stores it.
- When feeder link is available, the eNB sends the uplink data/NAS signalling to the CN.
- The eNB (same or different) receives the downlink data/NAS signalling from the CN and stores it when feeder link is available (and service link is not available).
- The eNB (same or different) sends the downlink data/signalling to the UE when service link is available again.

An S&F indication can be provided by SIB. RAN2 understands legacy UEs may be barred by legacy cell Barred and cellBarredNTN. Both single satellite pass and multiple satellite pass scenarios are considered (corresponding to one or multiple satellites on the same orbit). Both MO (mobile originated) and MT (mobile terminated) data transmissions are to be considered.

A UE is informed whether its serving satellite is currently operating in S&F via System Information broadcast. There will be a way to bar legacy UEs (using legacy cell Barred and/or cellBarred-NTN bit) and still allow Rel.19 S&F capable UEs. The dynamic indication that "the cell is operating in S&F mode" is called "S&F operation" indication. RAN2 assumes that if an indication that "the cell is operating in S&F mode" is not provided in a NTN cell, the UE should assume that the NTN cell is operating in real-time mode (i.e. default/normal/"not-S&F" mode). RAN2 assumes there should be no distinction between the case that the UE is served by an NTN cell that do not support S&F capability and the case that the UE is served by an NTN cell that does support S&F capability but indication that "the cell is operating in S&F mode" is not provided. If the "S&F operation" indication is not broadcast, a Rel.19 UE (regardless whether supporting S&F or not) shall follow the legacy barring procedure.

When present, the "S&F operation" indication has two possible settings: '1': the cell is operating in S&F mode for all UEs (Rel.19 UEs supporting S&F are allowed to access the cell); and '0': the cell is operating in S&F mode for UEs in Connected mode (which are not required to monitor the "S&F indication"), but idle Rel.19 UEs supporting S&F are barred (Rel. 19 UEs not supporting S&F will follow legacy barring procedure). Time information can be broadcast to indicate when the current satellite operation mode will transit from "S&F operation" mode to real-time/normal mode. RAN2 assumes that a Rel.19 UE could use this information at least to delay some NAS procedures until the feeder link is resumed. "S&F operation" indication is provided in SIB1.

It is noted that the above agreements are exemplary for specific standardization effort in 3GPP regarding LTE Rel. 19. However, the present disclosure is not limited to 4G or to 3GPP any these agreements do not have to apply for the present disclosure to work. Nevertheless, the present disclosure is readily applicable to the framework of LTE-based IoT-NTN with regenerative payload and the Store & Forward mode. Moreover, although reference was made to NB-loT and eMTC, these are only examples and any loT devices (such as ambient loTs, A-loT or mMTC or the like) may be involved.

### Signalling coverage area on beam-level

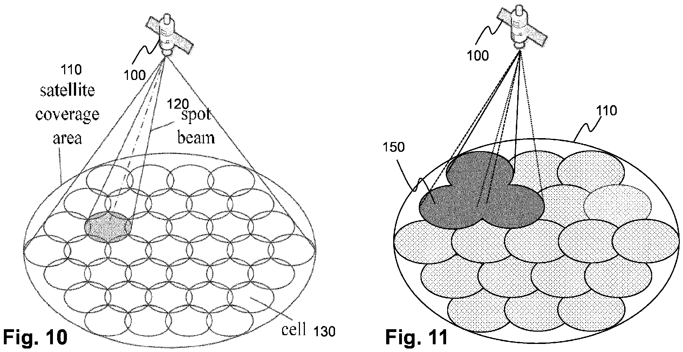

Within this framework, indication of multiple beams/cells per non-geostationary satellite (LEO, MEO, HEO) may have some inefficiencies. A first issue is a restricted signalling ability for indicating multiple beams/cells per satellite. **Fig. 10** illustrates a satellite 100 bearing a base station. The base station can transmit beams that cover (illuminate) a satellite coverage area 110. Illumination area covered by one (spot) beam 120 is shown by one shaded circle within the footprint of all possible beams. In Fig. 10, a single area 130 illuminated by a respective single beam is denoted as a cell. However, it is noted that for the present invention it is immaterial, whether a single beam or an aggregation of beams or the entire satellite coverage area 110 is configured as a cell. In principle, a cell may be defined to consist of one or more areas illuminated by respective beams.

**Fig. 11** shows the satellite 100 bearing the base station as in Fig. 10. As mentioned above, multiple areas may correspond to multiple cells and respective multiple (spot) beams that may be also referred to, in context of 3GPP, as Synchronization Signal Block beams (SSB beams). The case of a single cell being illuminated by multiple (spot) beams is shown in Fig. 10, whereas a case with multiple beams illuminating the corresponding area 150 is shown in Fig. 11. Specifically, in Fig. 11, three beams illuminate the area 150.

There is no signalling level below the satellite level. This means that only a simple case of one beam illuminating one cell is considered. Thus, currently, one would need to assign a satellite identifier *(satelliteld)* to each beam emitted by the same satellite. Due to the fact that a maximum of four *satellitelds* is actually permitted for the related signalling loop in corresponding SIBs, there is an undue restriction of the number of satellites and/or beams/cells. Describing more than four beams/cells - belonging to the same or different satellites is impossible. Hence the current coding does not provide a future-proof solution.

In order to address these issues, in this embodiment, a multi-beam approach is provided. Accordingly, signalling of beam-related attributes on a beam signalling level is possible and not limited to the satellite level. Such multi-beam approach may provide some advantages. For example, a beam (cell) level is introduced underneath the satellite level in the NTN-related signalling. On that basis, signalling redundancy can be reduced and a finer distinction is possible for the illumination areas. Also the aforementioned restrictions regarding the number of satellites, for which assistance information can be provided, are herewith loosened.

According to an exemplary implementation, a communication device is provided for communication with a non-terrestrial network (NTN). The communication device may be for instance a UE such as an IoT-NTN or another kind of UE such as a user terminal for communication or any other communication device. The term IoT-NTN or loT refers to any kind of loT device including but not limited to 3GPP narrow-band (NB) loTs and eMTC loTs or the like.

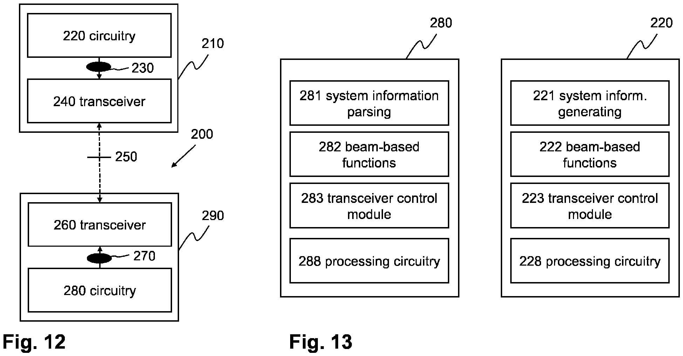

**Fig. 12** shows an exemplary structure of the communication device 290. The communication device comprises a transceiver 260 and circuitry 280. The transceiver 260 is configured to receive a system information from a base station (BS) of the NTN. The system information, as described above in connection with a 3GPP system, may be broadcast by the network and in particular from a base station such as an eNB or gNB. It contains information for synchronizing with the base station and enabling UEs to communicate with the base station. For completeness it is noted that system information does not have to be only broadcast. In general, for the UEs that have a connection pending with the network, the system information may be provided within a scheduled (shared or dedicated) channel.

The circuitry 280 is configured to extract, from the system information, a BS-level information associated with an identification of the base station. The BS-level information comprises two or more beam-level information elements, and each beam-level information element is associated with an identification of a respective beam-level area illuminated by one beam or by an aggregation of beams smaller than an area illuminable by the base station.

Identification of the base station may be identification of the vehicle carrying the base station such as a satellite ID or an ID of another BS bearing vehicle, assumed that one vehicle carries one base station. Aggregation of beams comprises two or more beams which are identified together by a single aggregated-area ID as the beam-level area identification. This may be useful in scenarios in which the BS is configured to always illuminate the two or more beams together. In such cases, signalling overhead is reduced in comparison with providing parameters for each beam individually.

As an example for the deployment of the present disclosure, LTE-based IoT-NTN is chosen. In the context of 3GPP, system information is broadcast in form of multiple system information block that respectively signal information of various kinds. For example, assistance information about satellites / NTN is widely covered with System Information Block (SIB) Types 31(-NB), 32(-NB) and 33(-NB):
- SIB31 (-NB): Information about the currently serving satellite.
- SIB32(-NB): Information about satellites not covering neighbouring areas, i.e. information related to satellites not currently serving or being available to the UEs, but satellites that may eventually arrive at the current location.
- SIB33(-NB): Information about satellites covering neighbouring areas.

The aforementioned SIBs are broadcast by the network to all UEs in the coverage area of the broadcasting base station. The suffix "-NB" refers to Narrow-BandSIB32(-NB) provides the information about satellites that the UE does not have a service link to currently, but may be service-linked to later. Part of the information provided is the field footprintlnfo-r17 describing the geographical area the satellite's footprint covers - i.e. there is no distinction between multiple cells or beams in the current standard. Similarly, SIB31(-NB) and SIB33(-NB) do not distinguish the respective beams. The present embodiment may be implemented in the context of 3GPP by modifying one or more of these SIBs as will be exemplified below.

In the present embodiment, for instance, the beam-level information element comprises information of a footprint of the respective beam-level area. Footprint may be defined in any manner describing the illuminated area. For example, the footprint may be defined relatively to a reference point with a certain latitude and longitude. The reference point may be signalled as part of the footprint description.

The footprint may be defined by radius around the reference point or by the leftmost and rightmost (with reference to the satellite direction) elevation angle of the satellite.

For instance, the system information further comprises or is associated with time instance information associated with the footprint of the respective beam-level area. Such time instance information may be an epoch indication that may be part of the BS-level information as it is assumed that the entire BS-level information may change in case the footprint of one beam changes. However, the present disclosure is not limited to BS-level signalling of the time instance and the time instance may also be signalled on the beam-level. Provision of the time instance may be useful is the footprint describes a satellite / base station that is currently not serving and/not even neighbouring the currently serving satellite / base station. In such case, the UE may use this information to calculate when the satellite will provide the coverage to the UE.

The BS-level information may still include the identification of the base station, and/or the beam-level information includes the identification of the respective beam-level area.

In the specific context of 3GPP systems (e.g. LTE and NR), the footprint and/or the time instance information may be comprised in a system information blocks (SIB) with the numbers 31 (SIB31(-NB)), 32 (SIB32(-NB)), and 33 (SIB33(-NB)). This includes parameters such as satellite ephemeris data and other relevant information needed for the User Equipment (UE) to effectively communicate with and utilize satellite services. Content of SIBs is defined in 3GPP LTE and NR within the RRC protocol (in specifications TS 36.331 and TS 38.331).

In the following, examples of a possible extension of the definition of SIB31(-NB), SIB32(-NB), and SIB33(-NB) is provided on the basis of the TS 36.331 V18.4.0 (2024-12). Underlined and bold parts are those added to support the additional footprint and time instance signalling mentioned above. It is noted that the ASN.1 syntax presented below is merely exemplary to serve a better understanding. The present disclosure is not limited to this specific example. There are alternative ways to design the syntax and semantics of RRC SIBs which would still provide the signalling of the footprint and the time instance in compliance with the present embodiment. Moreover, it is noted that the present disclosure is not limited to signalling within SIB31(-NB), SIB32(-NB), and SIB33(-NB) or to 3GPP systems.

Specifically, below a modified SIB33(-NB) is provided, indicating satellites that are covering the neighbouring (referred to as "neigh" in the following syntax element names) areas.

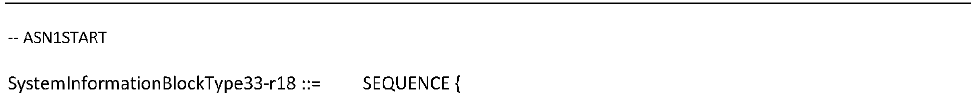

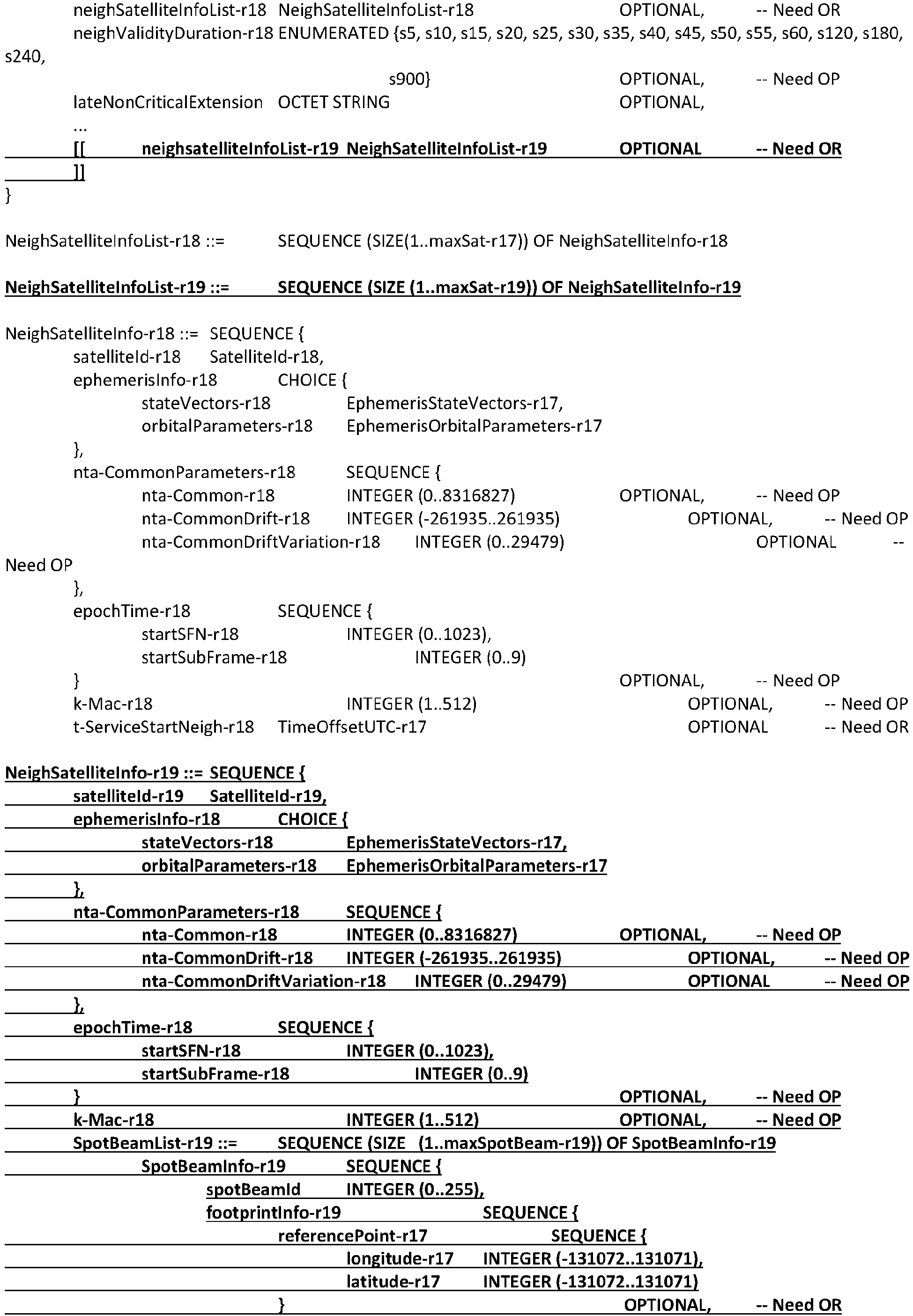

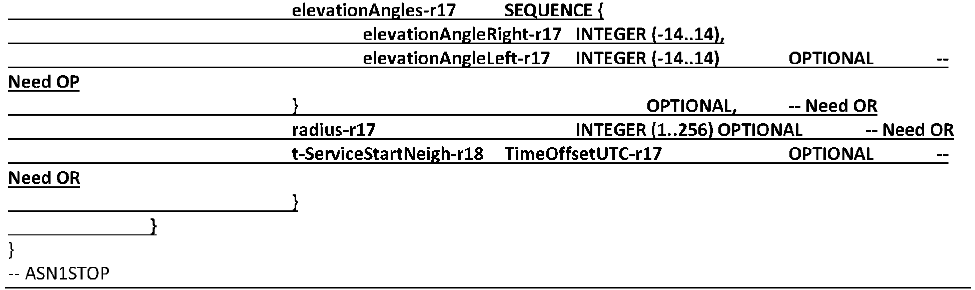

As can be seen from the above exemplary syntax, a new information container NeighSatellitelnfoList-r19 for Release-19 of LTE has been added. The information container carries the newly added elements. Specifically, a container SpotBeamList-r19 has been introduced, which lists respective spot beams. For each beam, SpotBeamlnfo-r19 information container is provided which comprises a spotBeamld (identification of the spot beam) and footprintlnfo-r19 (definition of the footprint of the spot beam).

In other words, the BS-level information is represented by the NeighSatellitelnfo-r19 information container including information on the satellite level of a satellite carrying a base station, i.e. corresponding to the BS-level. The BS-level information is provided in the form of a satellite ID (here the satelliteld-r19), which identifies a satellite and thus also the base station it is bearing. The above mentioned two or more beam-level information elements correspond to the one or more SpotBeamlnfo-r19 elements within the list of the beams. Thus, SpotBeamlnfo-r19 contains the beam-level information. The identification of the respective beam-level area corresponds to spotBeamld.

Should several spot beams illuminate a single cell (i.e. in case of beam-illuminated areas aggregated together), that mapping of the cell identification to the spot beam identification can either retain multiple spotBeamlds or consist of assigning the same spotBeamld to all beams illuminating that cell.

In the following, the semantics of some further relevant information elements from the above exemplified syntax is provided. The footprint is indicated in the footprintlnfo-r19 information and the time instance information corresponds to the epochTime-r18. It is noted that the suffix "-rX" with X being an integer is merely an indication of a release in which the element was introduced. This is a usual way in 3GPP syntax to introduce new elements for different versions (releases) of the standard. Thus, the names of the information elements are frequently referred to without this suffix, as also in the following table. The suffix does not usually change the semantics.

| ***SystemInformationBlockType33* field descriptions** |
|---|
| ***epochTime*** |
| Epoch time of the neighbour satellite ephemeris data and common TA (Timing Advance) parameters, see TS 36.213. The reference point for epoch time of the neighbour satellite ephemeris and Common TA parameters is the uplink time synchronization reference point of the serving cell when this field is provided in an NTN cell and the eNB when this field is provided in a TN cell. |
| *epochTime* is the starting time of a DL subframe indicated by *startSFN* and *start Subframe.* If this field is absent in an NTN cell, the UE uses epoch time of the serving cell, otherwise the field is based on the timing of the serving cell, i.e. the SFN and sub-frame number indicated in this field refers to the SFN and sub-frame of the serving cell. *The startSFN* indicates the SFN nearest to the frame where the message indicating the *epochTime* is received. If this field is absent in a TN cell, the epoch time is the starting time of the DL subframe corresponding to the end of the SI window during which the SI message carrying SIB33(-NB) is transmitted. |
| ***k-Mac*** |
| Scheduling offset used when downlink and uplink frame timing are not aligned at the eNB, see TS 36.213. Unit in ms. |
| If the field if absent, the UE uses the (default) value of 0. |
| ***neigh ValidityDuration*** |
| Validity duration of the neighbour satellite ephemeris data and common TA parameters, i.e. maximum time duration (from *epochTime*) during which the UE can apply the satellite ephemeris without acquiring new satellite ephemeris, see TS 36.213. Unit in second. |
| Value s5 corresponds to 5 seconds, value *s10* corresponds to 10 seconds and so on. |
| If this field is absent in an NTN cell, the UE uses validity duration from the serving cell assistance information. If this field is absent in a TN cell, how the UE sets validity duration is left to UE implementation. |
| ***nta-Common*** |
| Network-controlled common TA, see TS 36.213. Unit of µs. |
| Step of 32.55208 × 10⁻³ µs. Actual value = field value * 32.55208 ×10⁻³. |
| If the field is absent, the UE uses the (default) value of 0. |
| ***nta-CommonDrift*** |
| Drift rate of the common TA, see TS 36.213. Unit of µs/s. |
| Step of 0.2 ×10⁻³ ps/s. Actual value = field value * 0.2 ×10⁻³. |
| If the field is absent, the UE uses the (default) value of 0. |
| ***nta-CommonDriftVariation*** |
| Drift rate variation of the common TA, see TS 36.213. Unit of µs/s². |
| Step of 0.2 ×10⁻⁴ µs/s². Actual value = field value * 0.2 ×10⁻⁴. |
| If the field is absent, the UE uses the (default) value of 0. |
| ***t-ServiceStartNeigh*** |
| Indicates the earliest time when the area covered by the current serving cell is going to be covered by the neighbour cell(s) identified with *spotBeamId* served by the satellite indicated by *satelliteId,* see 5.5.3.1, 5.5.8 and 36.304. This field is only present for the NTN quasi-Earth fixed neighbour cell(s). |

Another example concerns modification of SIB32(-NB) shown in ASN.1 form below. Similarly to SIB33(-NB), in SIB32(-NB), beam-level information is introduced.

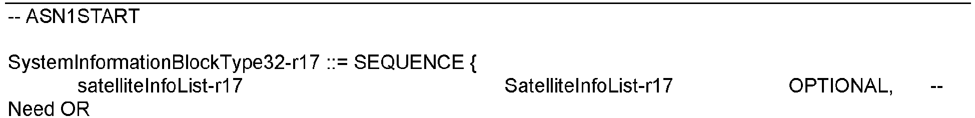

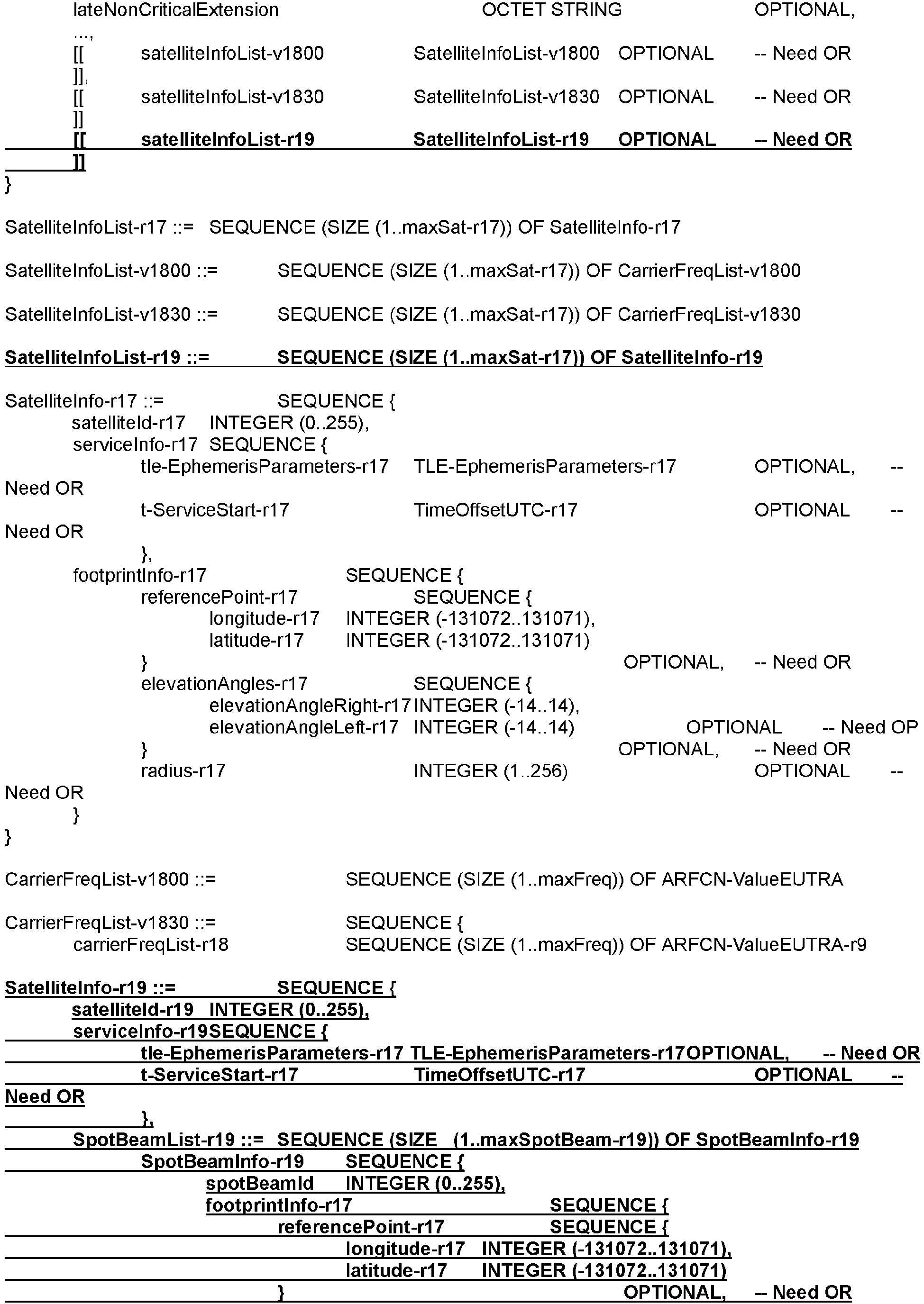

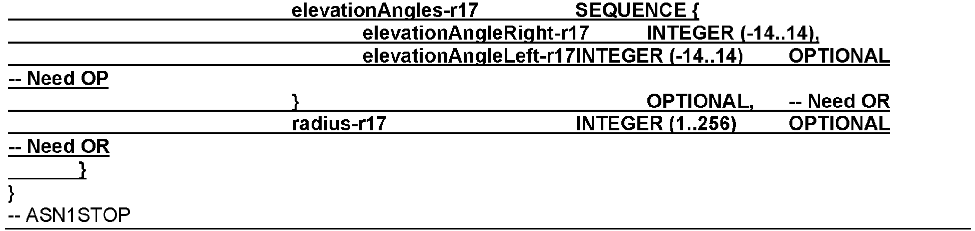

As can be seen from the above exemplary syntax, a new information container Satellitelnfo-r19 for Release-19 of LTE has been added. The information container carries the newly added elements. Specifically, a container SpotBeamList-r19 has been introduced, which lists respective spot beams. For each beam, SpotBeamlnfo-r19 information container is provided which comprises a spotBeamld (identification of the spot beam) and footprintlnfo-r19 (definition of the footprint of the spot beam).

In other words, the BS-level information is represented by the Satellitelnfo-r19 information container including information on the satellite level of a satellite carrying a base station, i.e. corresponding to the BS-level. The BS-level information is provided in the form of a satellite ID (here the satelliteId-r19), which identifies a satellite and thus also the base station it is bearing. The above mentioned two or more beam-level information elements correspond to the one or more SpotBeamlnfo-r19 elements within the list of the beams. Thus, SpotBeamlnfo-r19 contains the beam-level information. The identification of the respective beam-level area corresponds to spotBeamld.

In the following, the semantics of some further relevant information elements from the above exemplified syntax is provided. The time instance information is part of the tle-EphemerisParameters-r17 and possibly t-ServiceStart-r17).

| ***SystemInformationBlockType32* field descriptions** |
|---|
| ***carrierFreqList*** |
| Includes a list of E-UTRA frequencies, see TS 36.304. |
| ***elevationAngleLeft, elevationAngleRight*** |
| Leftmost and rightmost (with reference to the satellite direction) elevation angle. Unit in degree. Step of 5 degree. Actual value = field value * 5. |
| If the field *elevationAngleLeft* is absent, the leftmost elevation angle is equal to the value of field *elevationAngleRight.* |
| ***footprintinfo*** |
| Satellite spot beam footprint. |
| E-UTRAN may configure *elevationAngles* and/or *referencePoint* and *radius* for Earth moving cell. |
| E-UTRAN may configure *referencePoint* and *radius* for quasi-Earth fixed cell. |
| ***Latitude*** |
| Latitude of the reference point. Unit in degree. |
| Step of 360 / 262144 degree. Actual value = field value * (360 / 262144). |
| ***Longitude*** |
| Longitude of the reference point. Unit in degree. |
| Step of 360 / 262144 degree. Actual value = field value * (360 / 262144). |
| ***Radius*** |
| Distance between the reference point and the edge of the satellite spot beam coverage. Unit in km. |
| Step of 10 km. Actual value = field value * 10. |
| ***satelliteInfoList*** |
| List of satellite information. If E-UTRAN includes *satelliteInfoList-v1830,* it includes the same number of entries, and listed in the same order, as in *satelliteInfoList-r17.* |
| In this version of the specification, E-UTRAN does neither include *satelliteInfoList-r17* nor does it include *satelliteInfoList-v1800.* |
| ***serviceInfo*** |
| Information on when the satellite will provide coverage. |
| E-UTRAN always configures *tle-EphemerisParameters* for a satellite with Earth moving cell(s) and always configures *t-ServiceStart* for a quasi-Earth fixed cell. |
| ***spotBeamld*** |
| Identifies one of n spot beams emitted by the satellite identified with *satelliteId.* |
| ***spotBeamInfoList*** |
| List of spot beam information. |
| ***tle-EphemerisParameters*** |
| Mean values of the satellite orbital parameters based on the TLE set format for estimating in-coverage and out-of-coverage periods for a satellite with Earth moving cell(s), see TS 36.304. |
| ***t-ServiceStart*** |
| Time information on when the incoming satellite spot beam identified with spotBeamId is going to start serving the area for quasi-Earth fixed cell. |

In the following, examples are provide on how a UE may utilize the signalled information. However, it is noted that these examples are not exhaustive and that a UE does not have to implement any of these behaviours. Nevertheless, using the signalled beam-level information may facilitate some UE functions.

In an example, the circuitry 280 is configured to determine a status of the beam-based area based on said footprint and/or said time instance information and based on an own location of the communication device.

The status of the beam-level area includes at least one of:
- whether and/or when the beam-level area will coincide with the communication device,
- duration of coverage of the communication device by the beam-level area, and
- whether the beam-level area has attributes matching requirements of the communication device for uploading data.

It is noted that this status determination is applicable to the neighbouring and non-neighbouring (remote) area satellites, i.e. satellites that are not currently serving the UE. Thus, in the context of the specific examples above, SIBs SIB32(-NB) and SIB33(-NB) may be used to determine such status. In particular, beam coverage areas that will reach the UE can be distinguished from such illuminated areas that will hardly reach the UE. Furthermore, LTE-covered illumination areas can be discriminated from 5G-covered areas that would not be indicated here. Also non-illuminated areas within the large-scale, entire satellite footprint can be detected. The latter might be switched off part-time, for example for maintenance purposes.

Moreover, the circuitry 280 may be further configured to determine to remain in a mode of reduced energy consumption or to wake up based on said status of the beam-based areas. In other words, with the beam-level signalling, UEs can be aware of a more accurate timing to wake up and access the network especially in case of multi-beam/cell coverage areas. The "in a mode of reduced energy consumption" refers to any kind of status or mode with lower consumption than the status in which the UE actively communicates or reads all signalling channels. This may but does not have to correspond to sleeping modes or power saving modes defined in 3GPP or in other standards.

In an exemplary implementation, on basis of the beam/cell indication of reference point and distance threshold, UEs can initiate location-based measurements.

For example, the beam-level information comprises location-based measurement information on a reference point. A distance threshold may be indicated on a beam basis or in common for all beams. The reference point and a distance threshold may be used by the UE for determining, in a condition for measurement triggering, whether the own location of the communication device is farther from the reference point than the distance threshold.

The condition may be measurement triggering condition for determining whether or not the UE shall search for a next illumination area (next serving base station). The condition may consider more under-conditions, such as whether the own location of the communication device is farther from the reference point than the distance threshold as mentioned above. In addition, there may be conditions not based on location but based on received signal strength or the like.

The location-based measurement information may be indicated, for instance, within SIB31(-NB) of a 3GPP standard (e.g. LTE or NR). An exemplary ASN.1 syntax for location-based measurements on beam-level basis is shown below. As in the exemplary Syntax of SIB32(-NB) and SIB33(-NB) above, the changes are marked bold and by underlining.

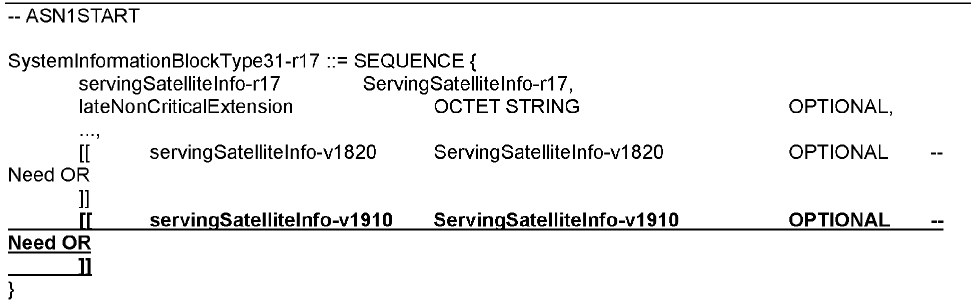

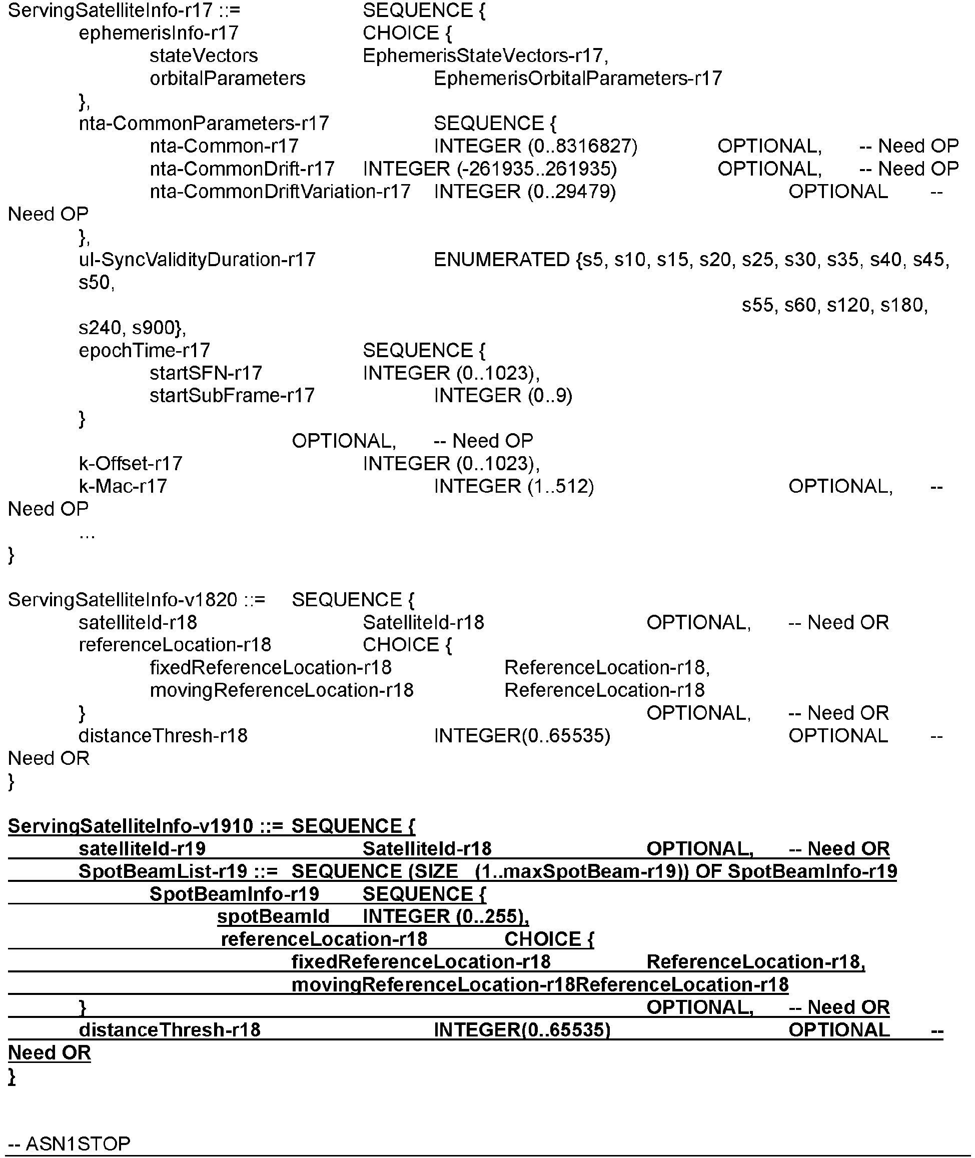

As can be seen in the exemplary syntax, an information container ServingSatellitelnfo-v1910 has been introduced which includes a satellite ID (base station identification) satelliteld-r19 and a newly added SpotBeamList-r19 as already mentioned above. Each beam in the list is identified by the spotBeamld. In addition to the beam ID, reference location referenceLocation-r18 is indicated per beam. The distance threshold distanceThresh-r18 l this example is indicated in common for all beams of the satellite BS. However, the present disclosure is not limited to this specific example and the distance threshold may be defined on a beam level or indicted in a different container or the like.

In the following semantics of the SIB31(-NB) information elements is provided.

| ***SystemInformationBlockType31* field descriptions** |
|---|
| ***distanceThresh*** |
| Distance from the serving cell reference location and is used in location-based measurement initiation in RRC_IDLE (as specified in TS 36.304 [4]) and RRC_CONNECTED. Each step represents 50m. |
| ***epochTime*** |
| Epoch time of the satellite ephemeris data and common TA parameters, see TS 36.213 [23]. This field also indicates the epoch time for the reference location of Earth moving cells if present. The reference point for epoch time of the serving satellite ephemeris and Common TA parameters is the uplink time synchronization reference point of the serving cell. |
| *epochTime* is the starting time of a DL subframe indicated by *startSFN* and *start Subframe.* For serving cell, the *startSFN* indicates the current SFN or the next upcoming SFN after the frame where the message indicating the *epochTime* is received. |
| If the field is absent, the epoch time is the starting time of the DL subframe corresponding to the end of the SI window during which the SI message carrying SIB31(-NB) is transmitted. E-UTRAN always includes *epochTime* when SIB31(-NB) is provided through dedicated signalling. |
| In case of handover or conditional handover, this field is based on the timing of the target cell, i.e. the *startSFN* and *startSubFrame* number indicated in this field refers to the SFN and sub-frame of the target cell, and UE considers the target cell epoch time (indicated by the *startSFN* and *startSubFrame* in this field) to be the frame nearest to the frame where *RRCConnectionReconfiguration* message is received. In case of handover or conditional handover, the reference point for epoch time of the target NTN payload ephemeris and Common TA parameters is the uplink time synchronization reference point of the target cell. |
| ***k-Mac*** |
| Scheduling offset used when downlink and uplink frame timing are not aligned at the eNB, see TS 36.213 [23]. Unit in ms. |
| If the field if absent, the UE uses the (default) value of 0. |
| ***k-Offset*** |
| Scheduling offset used in the timing relationships in NTN, see TS 36.213 [23]. Unit in ms. |
| ***nta-Common*** |
| Network-controlled common TA, see TS 36.213 [23]. Unit of µs. |
| Step of 32.55208 × 10⁻³ µs. Actual value = field value * 32.55208 ×10⁻³. |
| If the field is absent, the UE uses the (default) value of 0. |
| ***nta-CommonDrift*** |
| Drift rate of the common TA, see TS 36.213 [23]. Unit of µs/s. |
| Step of 0.2 ×10⁻³ ps/s. Actual value = field value * 0.2 ×10⁻³. |
| If the field is absent, the UE uses the (default) value of 0. |
| ***nta-CommonDriftVariation*** |
| Drift rate variation of the common TA, see TS 36.213 [23]. Unit of µs/s². |
| Step of 0.2 × 10⁻⁴ µs/s². Actual value = field value * 0.2 ×10⁻⁴. |
| If the field is absent, the UE uses the (default) value of 0. |
| ***orbitalParameters*** |
| Instantaneous values of the satellite orbital parameters. The signalled values are valid at least for the duration as defined by *ul-SyncValidityDuration* and *epochTime.* |
| ***referenceLocation*** |
| Reference location of the NTN (quasi-)Earth fixed cell or Earth moving cell, used in location-based measurement initiation in RRC_IDLE (as specified in TS 36.304 [4]) and RRC_CONNECTED if *distanceThresh* is also configured. If configured by an Earth moving cell, the broadcast reference location corresponds to the epoch time and is also used in the evaluation of Event D2 and CondEvent D2, and the UE derives the real-time reference location based on the serving satellite ephemeris, see TS 36.304 [4]. |
| ***spotBeamId*** |
| Identifies one of n spot beams emitted by the satellite identified with *satelliteId.* |
| ***stateVectors*** |
| Instantaneous values of the satellite state vectors. The signalled values are valid at least for the duration as defined by *ul-SyncValidityDuration* and *epochTime.* |
| ***ul-SyncValidityDuration*** |
| Validity duration of the satellite ephemeris data and common TA parameters, i.e. maximum time duration (from *epochTime)* during which the UE can apply the satellite ephemeris without acquiring new satellite ephemeris, see TS 36.213 [23]. Unit in second. |
| Value s5 corresponds to 5 seconds, value s10 corresponds to 10 seconds and so on. The *ul-SyncValidityDuration* is only updated when at least one of *epochTime, nta-CommonParameters, ephemerisInfo* is updated. |

The UE may be configured by the SIB31(-NB) to perform the measurements correspondingly. For example, the processing circuitry 280 evaluates the condition for measurement triggering including determining whether the own location of the communication device is farther from the reference point than the distance threshold. Then, in case said condition is satisfied, starts a search for a next illumination area.

As described above, the present embodiment may be particularly suitable (but not limited to) deployment in the framework of non-geostationary satellites and S&F mode. For example, non-geostationary orbits are equivalent to an illumination of areas on the ground that are either quasi-Earth-fixed (satellite moves but illuminates the same area as far as it is possible by tilting the beam) or Earth-moving (satellite moves and the illuminated area moves accordingly). The different cells are potentially of different nature - some might be relevant for a specific UE, others might not be of relevance for that particular UE. Relevance here may depend on a number of attributes of a cell, e.g. geographical location and extent, provider of the cell, Radio Access Technology (RAT), physical layer settings, application (e.g. loT, others) or the like. The different cells emitted from the satellite in question might be illuminated permanently or in an intermittent way. The illumination structure includes the case of beam-hopping. The illumination might be focused on areas where UEs are located.

In summary, in the present embodiment, the network provides information with regards to multiple areas on the ground illuminated by a single base station (e.g. born by a satellite) for instance in a non-geostationary orbit as illustrated in Fig. 10 and 11.

The present embodiment is not limited to 3GPP systems, but readily applicable to it. For example, regarding UE behaviour, receiving SIB31(-NB), SIB32(-NB) and/or SIB33(-NB) remains the same. Actions upon the reception may change compared to the existing definitions, for instance in TS 36.331 V18.4.0 (2024-12), clauses 5.2.2.39 to 5.2.2.41. Specifically, UEs are enabled to recognize different attributes - footprints in particular - of multiple cells emitted by the same satellite identified with its *satelliteld* (instead of recognizing only a single cell per *satelliteId*)*.* On the latter basis, UEs are able to identify those cells that are illuminated and are relevant for their intended data upload. For example for SIB31 (-NB): On the basis of the beam/cell indication of ref. point and distance threshold, UEs can initiate location-based measurements. For SIB32(-NB): Based on a cell's footprint at epoch (part of TLE two-line element specifying current time), the UE is able to determine the arrival of that cell at its own location. The UE is also able to separate cells whose footprint won't touch its own location from those whose footprint will reach the UE. Even an estimation of the duration of the illumination of UE's location is feasible. For SIB33(-NB): In the multi-beam/cell case the UE would receive accurate beam/cell-related footprint information instead of less accurate satellite-related information.

Benefits of the present embodiment may include the introduction of underneath the satellite level signalling in the IoT-NTN-related signalling of LTE reflecting a logical structure and hierarchy facilitating the information structuring. UEs may be enabled to execute location-based measurements in a well-structured way. UEs can be aware of an accurate timing to wake up and access the network especially in case of multi-beam/cell coverage areas. For Earth-moving cell, cell boundary moves according to satellite movement. With the multi-cell information, UE can avoid access the network at cell edges where the UE needs to handover or re-connect soon. UE is able to distinguish between relevant and non-relevant cells (LTE / 5G cells vs UE capabilities) being emitted by the same satellite. In presence of the mentioned beam/cell signalling level signalling redundancy can be reduced.

It is noted that the description of one spot beam or area covered by more than one beam (aggregated) or the entire satellite coverage may correspond to one cell. The present disclosure may aid in defining the cells.

**Fig. 12** shows, apart from the communication device 290, also an exemplary structure of a base station 210. The base station is for a non-terrestrial network, NTN, and comprises a circuitry 220 and a transceiver 240. The circuitry 220 is configured to generate system information including a BS-level information associated with an identification of the base station. The BS-level information comprises two or more beam-level information elements, and each beam-level information element is associated with an identification of a respective beam-level area illuminated by one beam or by an aggregation of beams smaller than an area illuminable by the base station. The transceiver 240 is configured to transmit the system information generated by the circuitry 220.

In other words, the beam-level signalling described above with reference to the communication device (UE, including loT devices) as receiving it, is transmitted by the base station 210. Accordingly, all exemplary implementations described above related to the signalling of the system information also apply for the base station 210. As is illustrated in Fig. 12, the base station 210 and the communication device 290 communicate over a wireless interface 250. The wireless interface in some examples may be a 3GPP standard interface such as 4G or 5G interface defined between the base station and the UE in the NTN scenario.

It is noted that a transceiver (such as the transceiver 240 of the base station and the transceiver 260 of the base station) may include typical digital and/analogue front end elements implementing the transmitting and receiving chain. Such elements may be amplifiers, up-conversion/down-conversion, analogue to digital / digital to analogue conversion circuits, ports for connecting antennas and possibly also antennas. The base station includes more than one antennas I order to perform beamforming. The UE may comprise one or more antennas or antenna ports. These are only exemplary elements and the transceiver may include further elements.

The circuitry (such as the circuitry 220 of the base station and the circuitry 280 of the base station) may be any one or more hardware pieces. For instance, the circuitry may be implemented by an integrated circuit (IC) or by a combination of one or more processors and/or programmable or application specific hardware or other electronic circuitry. The circuitry may be configured to control the transceiver to receive and transmit signals. This is illustrated in Fig. 12 by way of interface 230 on the base station side and by way of interface 270 on the side of the communication device.

In one possible implementation, the circuitry 280 of the communication device embodies functional modules shown in **Fig. 13****.** In particular, the circuitry 280 comprises a module 281 for system information (SI) parsing, a module 282 for beam-based functions, and a transceiver control module 283. Moreover, there may be processing circuitry 288 that provides further functionality of physical, MAC or higher layers. Similarly, the circuitry 220 comprises a module 221 for system information (SI) generating, a module 222 for beam-based functions, and a transceiver control module 223. Moreover, there may be processing circuitry 228 that provides further functionality of physical, MAC or higher layers.

The module 281 for system information (SI) parsing implements receiving a demodulated and decoded system information and parsing the information elements included therein, including beam-level elements. The module 282 for beam-based functions implements UE behaviour based on the beam-level information. For example, estimating the time of illumination by a beam or group of beams, location-based measurements on beam level, or the like. The transceiver control module 283 controls the transceiver 260 to receive or transmit signals, including reception of system information and transmission of UE own data.

The module 221 for system information (SI) generating implements the functionality of preparing the system information for transmission. The module 222 for beam-based functions includes determining of the beam-level information to be included into the system information. It may further include performing beam hopping or the like. The transceiver control module 223 controls the transceiver 260 to receive or transmit signals, including transmission of system information and reception of UE data.

Returning back to the base station, according to an exemplary implementation, the BS-level information includes a plurality of beam-level areas. The processing circuitry 280 is configured to illuminate the beam-level areas by time-domain hopping between the plurality of beam-level areas. Beam hopping or hopping between areas that are smaller than the satellite coverage may provide for a more efficient power usage and may increase coverage.

As mentioned above, the present embodiment may be particularly suitable for geostationary satellites and configured to perform store and forward operation.

The base station may further comprise a storage, wherein the processing circuitry, in operation performs the S&F as follows:
- causes the transceiver to receive data from a communication device located in one of two or more beam-level areas associated with the respective beam-level information and store the data in the storage, and
- when a connection to the terrestrial node of the NTN becomes available, causes the transceiver to transmit the data to the terrestrial node of the NTN;
and/or
- when a connection to the terrestrial node of the NTN becomes available, causes the transceiver to receive data for a communication device from a terrestrial node of the NTN and stores the data in the storage, and
- causes the transceiver to transmit the data to the communication device when the communication device is located in one of two or more beam-level areas associated with the respective beam-level information.

It is noted that system information, although transmitted by the base station, may be partly or entirely configured by a terrestrial network function or a network node. Correspondingly, a network node for communication with a base station, BS, of a non-terrestrial network, NTN, is provided. The network node comprises a circuitry which, in operation generates, system information including a BS-level information associated with an identification of the base station. The BS-level information comprises two or more beam-level information elements, and each beam-level information element is associated with an identification of a respective beam-level area illuminated by one beam or by an aggregation of beams smaller than an area illuminable by the base station. The network node further comprises a transceiver which, in operation, transmits the system information to the base station. It is noted that the term "network node" does not imply a simple physical device. The function of the network node may be distributed. Moreover, the above described examples relating to the content of beam-level signalling are applicable to the network node, too, as the network node may originate the information or its parts.

It is noted that in addition or alternatively to the apparatuses (communication device and a base station), methods are provided. Specifically, a method may contain steps performed by the processing circuitry 220 of a base station 210 or the circuitry 280 of the communication device 290.

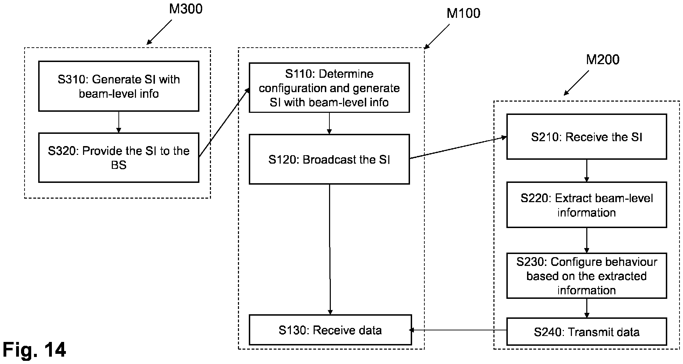

For example, a method is provided for a non-terrestrial network, NTN. Such method M100 is exemplified in **Fig. 14****.** The method may be performed, for example at a base station such as an eNB or gNB, born on a vehicle as described above. The method comprises a step S110 of generating system information including a BS-level information associated with an identification of the base station. The BS-level information comprises two or more beam-level information elements, and each beam-level information element is associated with an identification of a respective beam-level area illuminated by one beam or by an aggregation of beams smaller than an area illuminable by the base station. In step S120, the system information is transmitted, e.g. broadcast.

The broadcast information may be received by one or more communication devices. Correspondingly the one or more communication devices may perform a method M200 for communication with a non-terrestrial network, NTN. Such method is illustrated in Fig. 14. The method comprises a step S210 of receiving a system information from a base station, BS, of the NTN. After receiving S210, the method comprises a step S220 of extracting, from the system information, a BS-level information associated with an identification of the base station. The BS-level information comprises two or more beam-level information elements, and each beam-level information element is associated with an identification of a respective beam-level area illuminated by one beam or by an aggregation of beams smaller than an area illuminable by the base station.

The received and extracted beam-level information is the further used to configure behavior at the side of the communication device in step S230. Some examples have been presented above. For instance, the communication device may configure location-based measurement based on the beam-level information, configure energy saving procedures, or use the information for further purposes in connection with configuring handover to different base stations or timing of data transmission or reception or the like. In step S240, the communication device may transmit (or in general transmit and/or receive) data to the base station.

Correspondingly, in the method M100 of the base station, the base station may receive S130 the data (in general receive and/or transmit) from the communication device.

It is noted that the system information does not have to originate from the base station. Rather, a network entity (network function, network node) may configure the base station with the data. In other words, in some systems, at least a part of system information is configured by a network node. Correspondingly, Fig. 14 shows a method M300 that can be performed at a network node (e.g. a gateway or a server, or any one or more core network entities). M300 is a method for communication with a base station, BS, of a non-terrestrial network, NTN. The method comprises a step S310 of generating, system information including a BS-level information associated with an identification of the base station. The system information may be a part of the system information actually broadcast by the base station in S120. Specifically, the BS-level information may comprise two or more beam-level information elements, and each beam-level information element is associated with an identification of a respective beam-level area illuminated by one beam or by an aggregation of beams smaller than an area illuminable by the base station. In step S320, the system information is transmitted to the base station.

The base station may use the information in step S110 when generating the system information to be broadcast in step S120. In particular, the generating S110 of the system information includes determining of the configuration that is to be broadcast. This determination may be performed by receiving the configuration from the network node and/or by configuring transmission parameters by the base station e.g. by determining own location, timing and the like.

### Signalling of delivery time and storage status

As mentioned above, Store and Forward (S&F) operation in LTE NTN is used to handle data transmission in scenarios where continuous connectivity is not possible. This approach involves temporarily storing data at intermediate nodes (e.g. base station bearing satellites) and then forwarding it when a connection becomes available. This may be useful for delay-tolerant applications, such as loT devices in remote or hard-to-reach areas, but may be also more widely used for any kind of UEs. Some benefits of S&F operation include that by storing data until a connection is available, S&F helps to maintain communication even when direct links are temporarily unavailable. Moreover, S&F optimizes data transmission by ensuring that data is forwarded as soon as a connection is reestablished. In this way, S&F allows for extended service coverage in areas where continuous ground station connectivity is not feasible, such as marine on open sea or very remote regions.

However, S&F may also provide some challenges. The NTN base station has a limited storage capacity which is shared by all UEs (and possibly gateways) that are illuminated by the BS beam (or beams) until the gateway is illuminated. Moreover, the S&F may introduce delivery delays that may not be acceptable for some applications. In order to improve the S&F operation, according to the present embodiment, indication of delivery time and/or of storage status (e.g. remaining storage space) per UE is provided.

Delivery time is the time it takes - e.g. via a particular satellite - to get data transferred from the UE to the related application provider. In absence of delivery time knowledge, data stemming from the UE - e.g. a sensor - may reach the application provider too late for being used there, e.g. for a related application. If there is no way out, i.e. a single S&F data routing option is the only existing one, then an indication of delivery time could at least prevent useless data transfers, i.e. the UE could refrain from transferring data when it is clear a priori that the data would reach its destination too late. On the other hand, when there are alternative routing options for the data to be transferred, i.e. satellites in intersecting or parallel orbits, inclusion of Inter-Satellite Links (ISLs) or even real-time mode if available too, the routing may become a trade-off between tariffs of the different routes and the related service quality.

Remaining available storage space per UE aboard a satellite may provide a useful information for a UE. For example when assuming 1 GB total remaining memory in the base station, it means 1 MB for each of a 1000 UEs (if they are all handled with the same priority). In absence of knowledge of the remaining storage space per UE on board of the satellite, when storage space aboard the satellite/eNB becomes scarce, the solution under existing conditions is to not schedule uploads for a part of the UEs waiting for that upload. This may cause an unacceptable deterioration of the service quality.

Thus, in the present embodiment, according to a first option, a delivery time indication is provided instead of leaving UEs uninformed about the time it takes via a certain routing option in their S&F environment to provide content to the network.

According to a second option, indication of remaining storage space is provided for each UE aboard a satellite in order to prevent upload blockage for a number of UEs when the storage space aboard the specific satellite nears overflow.

The first option and the second option may be combined, i.e. both the delivery time information and the storage status may be indicated to the UEs.

The first option (delivery time indication) namely assisting the UE with the information about the time it takes from the upload between UE and eNB aboard the satellite (service link present during that phase) to the offloading of the data from the eNB/satellite to the network/gateway on the ground enables decisions on UE side regarding the routing of its data (depending on a number of factors) and if the upload makes sense at all in the light of unfortunate timing. In the absence of the delivery time information, the data upload is a blind one (best effort service).

The second option (the indication of remaining storage space for single UE aboard a satellite) provides some advantages especially in the situation when storage space aboard the satellite or group of interlinked satellites becomes scarce. Information about available remaining storage space per UE can then enable all UEs that want/need to upload data to keep the limit in mind and restrict - if necessary - the amount of data being transferred to the satellite in a smart manner (e.g. lower resolution, lower sampling rate etc.). The absence of the information about remaining storage space may lead to a hard blockage for all or part of the UEs, which is equivalent to an unreliable service quality.

In the following, some exemplary implementations are provided on such signalling of delivery time information and/or storage status information. In particular, a base station generates and transmits such information and a communication device such as a UE receives and extracts such information.

Correspondingly, a communication device is provided for communication with a non-terrestrial network (NTN). The communication device may have the same structure as the communication device 290 of Fig. 12, i.e. include a transceiver and a circuitry. Specifically, the communication device comprises a transceiver 260 configured to receive a system information from a base station of the NTN. The circuitry is configured to extract, from the system information for a predetermined illumination area, at least one of (one of or both):
- a delivery time information indicating a time interval that includes at least time required until data transmitted from the communication device via the base station are conveyed to a terrestrial gateway, and
- a storage status information indicating capacity available in a storage of the base station for storing the data from the communication device.

The circuitry then controls the transceiver regarding the transmission of the data from the communication device to the base station according to the extracted delivery time information and/or the storage status information.

The predetermined illumination area may be an area also defined in the system information (e.g. by footprint), such as the satellite coverage area 110 illustrated in Fig. 10. However, the present disclosure is not limited thereto, and the predetermined illumination area may be beam-based, e.g. indicated for one or more beams of the coverage area 110, e.g. as shown in Fig 11, reference sign 150. Controlling the transceiver regarding the transmission of the data includes the possibility of controlling the transceiver to transmit the data or not to transmit the data.

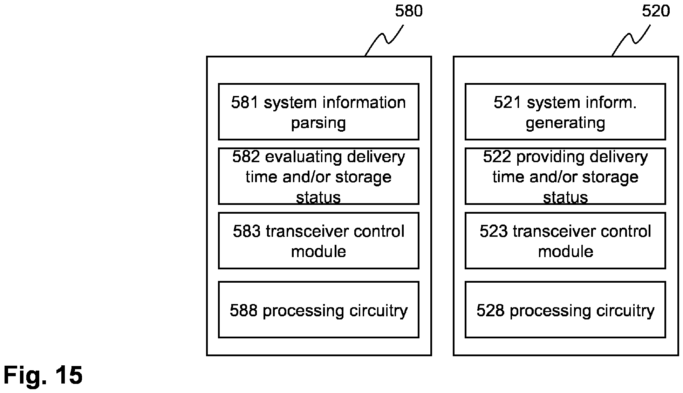

**Fig. 15** illustrates functional modules that may be implemented by circuitry 580 of the communication device. This circuitry may replace circuitry 280 of Fig. 12 in this embodiment. For example, the circuitry 580 includes a module 581 for system information parsing. This module receives system information via the transceiver 260 and parses the syntax elements included therein. This includes the delivery time information and/or the storage status information. The module 582 implements evaluating of the delivery time information and/or the storage status information. This may include evaluation for any use at the communication device, as described and exemplified above. For example, the communication device may evaluate whether or not to send the data (or compressed data) according to the storage status and/or based on the delivery time expected, it may select a route based on the delivery time and/or storage status associated with the respective routes available, or the like. The transceiver control module 283 controls the transceiver 260 to receive or transmit signals, including reception of the system information and transmission of UE own data. Moreover, the processing circuitry 588 implements further functions e.g. of the physical and MAC layer or higher layers for modulation/demodulation, coding/decoding, providing and parsing signalling and data and the like, similarly to the module 288 described above.

Fig. 15 further illustrates functional modules that may be implemented by circuitry 520 of the base station. This circuitry may replace circuitry 220 of Fig. 12 in this embodiment. For example, the circuitry 520 includes a module 521 for system information (SI) generating that implements the functionality of preparing the system information for transmission. The module 522 for providing delivery time and/or storage status implements determining the estimated delivery time (e.g. based on preceding deliveries) and/or estimated storage capacity per UE (e.g. based on number of the UEs to serve until the next gateway is met, possibly based on UE priorities, and based on the BS-own storage capacity). It is noted that the information on delivery time and/or the storage status may be provided for more than one possible links as mentioned above. The transceiver control module 523 controls the transceiver 260 to receive or transmit signals, including transmission of system information and reception of UE data. Moreover, the processing circuitry 528 implements further functions e.g. of the physical and MAC layer or higher layers for modulation/demodulation, coding/decoding, providing and parsing signalling and data and the like, similarly to the module 228 described above.

For example, the time interval indicated by the delivery time information accumulates:
- time for transmitting the data from the communication device to the base station which includes time until which the communication device is illuminated from the base station,
- time for transmitting the data from the base station to the gateway which includes time until which connection of the base station to the gateway is available, and/or
- time for transmitting the data from the gateway to the network and an application server in the end.

Which of these times are actually considered in the delivery time information may be a matter of convention, e.g. given by a standard.

It is noted that the gateway in the last step provides the data to the target destination. The target destination is, in general an application server, as it is assumed that the data are collected for a specific application using them. The application server may be in internet or in a private network. The gateway may provide the data to the application server over the network (e.g. over the 3GPP core network architecture), i.e. provide the data first to the network which passes them to the actual application server. However, it is conceivable that the application server could be, in some architectures, also a part of the core network in case specific data are collected that are used by the core network.

In the case when the base station is born by non-terrestrial vehicle and operates in a store and forward mode, said time interval may advantageously include at least the time during which the base station passes between an illumination area illuminating said terrestrial gateway and an illumination area illuminating said communication device. This is because this time component may be the longest.

In general, the complete delivery time is the time span between the start of the upload from a UE to a satellite (service link) until the content reaches the application provider, i.e. the entity processing the data and making it available to users (feeder link involved) - subdivided as follows:
- t₁: Time it takes to transfer the data from UE to satellite
- t₂: Time the satellite needs to travel from the aforementioned uplink position in its orbit to the position where it (re)establishes the feeder link to the gateway on the ground
- t₃: Time it takes to transfer the data from the satellite to the gateway
- t₄: Time it takes to transfer the data from the gateway to the application provider (via the Internet)
- Total delivery time DT = t₁ + t₂ + t₃ + t₄ (major portion represented by t₂)

Delivery time may depend on the particular route the data transfer takes, e.g. the concrete satellite/UAV/HAPS and related orbit, the involvement of Inter-Satellite Links (ISLs) etc. Different routing options might be connected to different data transfer tariffs, i.e. higher tariffs are assigned to shorter delivery time, lower tariffs are assigned to longer delivery times. As mentioned above, the time interval t₂ is most relevant to the delay, there can be selection of satellites in different orbits (e.g. crossing) or inter satellite links if possible can be faster than waiting for one satellite in one specific orbit.

The communication device may adapt its behaviour according to the received delivery time information. For example, the circuitry 580 (instead of 280) of the communication device 290 evaluates whether the time interval indicated in the delivery time information exceeds a predefined requirement of an application to which the data is pertaining. If the time interval does not exceed the predefined requirement, the circuitry 580 controls the transceiver 580 to transmit the data to the base station. If the time interval exceeds the predefined requirement, the circuitry 580 controls the transceiver to skip transmitting the data to the base station. Skipping the transmission may save power and resources / interference.

The predefined requirement of an application may be a requirement on maximum latency or a requirement on time point with which data are associated (e.g. a requirement that certain sensor data may not be older than 1 minute or the like).

As mentioned above, there may be more alternative paths, e.g. in case of inter-satellite links available. In an exemplary implementation, the circuitry 580 evaluates, for each of a plurality of predetermined illumination areas, the time interval indicated with the delivery time information, wherein the time interval is further associated with a respective tariff. The circuitry 580 then selects a predetermined illumination area based on the time interval and the respective associated tariff, and controls the transceiver to transmit the data to the base station illuminating said selected predetermined illumination area. However, the present disclosure is not limited to selection of a base station based on economic aspects. There may be alternative routes possible for data delivery over the same base station, e.g. instead of waiting until the next gateway is illuminated, the base station could use an inter-satellite link. Such routes can be signalled for the serving satellite to the UE so that the UE can select the route based on the provided delivery time and possibly costs.

In an exemplary implementation, the circuitry 580, in operation, evaluates whether the amount of said data to be transmitted exceeds the capacity available in the storage. If the amount of said data to be transmitted does not exceed the capacity available in the storage, the circuitry 580 controls the transceiver to transmit the data to the base station. If the amount of said data to be transmitted exceeds the capacity available in the storage, the circuitry 580 controls the transceiver to:
- skip transmitting the data to the base station, or
- generate reduced data based on said data and transmit the reduced data to the base station, wherein the amount of the reduce data is smaller than or equal to the capacity per UE available in the storage.

Skipping the transmission may save power and resources / interference. Data reduction may not always be possible. However, in some application, the communication device may prioritize and transmit only the most important data or decrease accuracy of the data (e.g. by lossy compression) or the like.

As mentioned above, there may be more alternative paths, e.g. in case of inter-satellite links available. In an exemplary implementation, the circuitry 580 evaluates, for each of a plurality of predetermined illumination areas, the storage available when alternative paths using more than one base station (satellite) and inter-satellite-links are used. The system information may include more routes and indicate, for each possible route, the available storage. In addition, the system information may include, per route, costs associated with the respective route. The cost may be indicated i.e. by a cost category indication or by a number of hops until the data is passed to the gateway or the like. The present disclosure is not limited to selection of a base station based on such economic aspects. There may be alternative routes possible for data delivery over the same base station, e.g. instead of waiting until the next gateway is illuminated, the base station could use an inter-satellite link. Such routes can be signalled for the serving satellite to the UE so that the UE can select the route based on the provided storage status and possibly costs.

Moreover, the routes may be associated with both, a delivery time information and a storage status information and the corresponding cost indication. Accordingly, the communication devices (UE) may select the route to take based on all three parameters.

It is noted that the present embodiment is not limited to 3GPP systems. Nevertheless, the present embodiment is readily applicable to the 3GPP framework. For example, the delivery time information and/or the storage status information are included within SIB31(-NB) of a 3GPP standard. In the following, an exemplary ASN.1 syntax of the SIB31(-NB) block modified to accommodate delivery time information is provided. As mentioned in connection with a preceding embodiment, the provided ASN.1 excerpts are merely exemplary and not to limit the present disclosure. There may be different ways of modifying the existing syntax or providing the delivery time in another system or manner. As in the preceding embodiment, the changes against the current SIB31(-NB) definition are shown in bold and underlined.

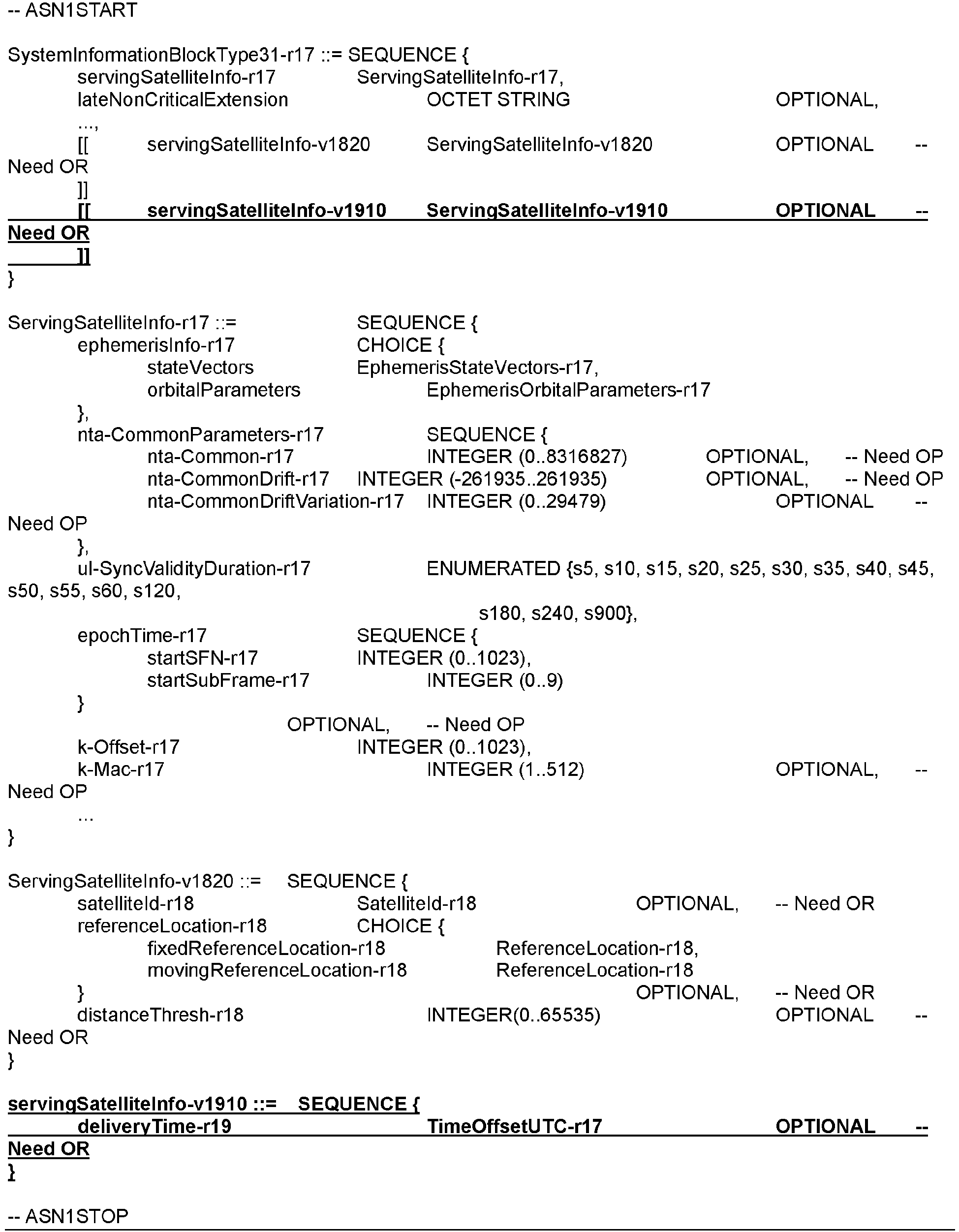

As can be seen in the above syntax, an information container servingSatellitelnfo-v1910 is provided, which includes information element deliveryTime-r19. In the present example, the deliveryTime-r19 is defined as an offset relative to UTC (Coordinated Universal Time). This is only exemplary - the delivery time may be expressed in any manner. It is noted that when referring to "delivery time" what is meant is actually an estimated delivery time. The base station estimates the delivery time, but there still may be some inaccuracies. Semantics of the information elements is provided below.

| ***SystemInformationBlockType31* field descriptions** |
|---|
| ***deliveryTime*** |
| Point of time, at which in Store & Forward mode (see SIB1 signalling) the data the UE uploads to the satellite (service link exists) will be downloaded from the satellite to the remote gateway (feeder link exists). |
| ***distanceThresh*** |
| Distance from the serving cell reference location and is used in location-based measurement initiation in RRC_IDLE (as specified in TS 36.304) and RRC_CONNECTED. Each step represents 50m. |
| ***epochTime*** |
| Epoch time of the satellite ephemeris data and common TA parameters, see TS 36.213. This field also indicates the epoch time for the reference location of Earth moving cells if present. The reference point for epoch time of the serving satellite ephemeris and Common TA parameters is the uplink time synchronization reference point of the serving cell. |
| *epochTime* is the starting time of a DL subframe indicated by *startSFN* and *start Subframe.* For serving cell, the *startSFN* indicates the current SFN or the next upcoming SFN after the frame where the message indicating the *epochTime* is received. |
| If the field is absent, the epoch time is the starting time of the DL subframe corresponding to the end of the SI window during which the SI message carrying SIB31(-NB) is transmitted. |
| E-UTRAN always includes *epochTime* when SIB31(-NB) is provided through dedicated signalling. |
| In case of handover or conditional handover, this field is based on the timing of the target cell, i.e. the *startSFN* and *startSubFrame* number indicated in this field refers to the SFN and sub-frame of the target cell, and UE considers the target cell epoch time (indicated by the *startSFN* and *startSubFrame* in this field) to be the frame nearest to the frame where *RRCConnectionReconfiguration* message is received. In case of handover or conditional handover, the reference point for epoch time of the target NTN payload ephemeris and Common TA parameters is the uplink time synchronization reference point of the target cell. |
| ***k-Mac*** |
| Scheduling offset used when downlink and uplink frame timing are not aligned at the eNB, see TS 36.213. Unit in ms. |
| If the field if absent, the UE uses the (default) value of 0. |
| ***k-Offset*** |
| Scheduling offset used in the timing relationships in NTN, see TS 36.213. Unit in ms. |
| ***nta-Common*** |
| Network-controlled common TA, see TS 36.213. Unit of µs. |
| Step of 32.55208 × 10⁻³ µs. Actual value = field value * 32.55208 ×10⁻³. |
| If the field is absent, the UE uses the (default) value of 0. |
| ***nta-CommonDrift*** |
| Drift rate of the common TA, see TS 36.213. Unit of µs/s. |
| Step of 0.2 ×10⁻³ ps/s. Actual value = field value * 0.2 ×10⁻³. |
| If the field is absent, the UE uses the (default) value of 0. |
| ***nta-CommonDriftVariation*** |
| Drift rate variation of the common TA, see TS 36.213. Unit of µs/s². |
| Step of 0.2 × 10⁻⁴ µs/s². Actual value = field value * 0.2 ×10⁻⁴. |
| If the field is absent, the UE uses the (default) value of 0. |
| ***orbitalParameters*** |
| Instantaneous values of the satellite orbital parameters. The signalled values are valid at least for the duration as defined by *ul-SyncValidityDuration* and *epochTime.* |
| ***referenceLocation*** |
| Reference location of the NTN (quasi-)Earth fixed cell or Earth moving cell, used in location-based measurement initiation in RRC_IDLE (as specified in TS 36.304) and RRC_CONNECTED if *distance Thresh* is also configured. If configured by an Earth moving cell, the broadcast reference location corresponds to the epoch time and is also used in the evaluation of Event D2 and CondEvent D2, and the UE derives the real-time reference location based on the serving satellite ephemeris, see TS 36.304. |
| ***state Vectors*** |
| Instantaneous values of the satellite state vectors. The signalled values are valid at least for the duration as defined by *ul-SyncValidityDuration* and *epochTime.* |
| ***ul-SyncValidityDuration*** |
| Validity duration of the satellite ephemeris data and common TA parameters, i.e. maximum time duration (from *epochTime*) during which the UE can apply the satellite ephemeris without acquiring new satellite ephemeris, see TS 36.213. Unit in second. |
| Value s5 corresponds to 5 seconds, value s10 corresponds to 10 seconds and so on. |
| The *ul-SyncValidityDuration* is only updated when at least one of *epochTime, nta-CommonParameters, ephemerisInfo* is updated. |

In summary, the network indicates to the UE information on data delivery time from UE's upload to a satellite/UAV/HAPS to the application provider being connected to the Internet (including service link and - after a certain time period - feeder link). Indication of delivery time is relevant in a Store & Forward type of communication environment, i.e. an environment that can structurally not guarantee data transfer in real-time or near real-time manner. A typical example for such a non-real-time communication environment is a satellite/UAV/HAPS network of non-geostationary satellites/UAVs/HAPSs being spread over orbits/routes in a non-dense manner leading to non-overlapping, intermittent coverage on the ground.

Regarding UE behaviour, receiving SIB31(-NB) may be performed similarly to the existing definitions in TS36.331 V18.4.0 (2024-12), clause 5.2.2.39 - apart from the parsing of the newly added information. With the information, UEs are enabled to recognize the delivery time being connected to the satellite (identified by its satelliteId) and a) the unity of all cells emitted by that satellite or b) being connected to a single cell or a group of cells out of multiple cells (instead of recognizing the entire coverage area the satellite is able to illuminate as one cell being connected to one satelliteld).

Assisting the UE with the information about the time it takes from the upload from UE to eNB aboard the satellite (service link present during that phase) and the data reaching the application provider enables decisions on UE side regarding the routing of its data (depending on a number of factors) and if the upload makes sense at all. Should the indicated delivery time be too long for the related purpose/application, the UE could simply refrain from uploading its data - which would also assure that storage space aboard the satellite is not occupied unnecessarily.

As an example for the deployment of the present embodiment in LTE-based IoT-NTN has been provided above. Here, assistance information about satellites/NTN is widely covered with System Information Block (SIB) Types 31(-NB), 32(-NB) and 33(-NB). As mentioned above, SIB31(-NB) relates to information about the currently serving satellite, SIB32(-NB) relates to information about satellites not covering neighbouring areas, and SIB33(-NB) relates to information about satellites covering neighbouring areas. Aforementioned SIBs are broadcast by the network (by base station) to all UEs.

SIB31(-NB) provides the information about the serving satellite. The indication of delivery time finds its place in SIB31(-NB) - either in a satellite-related manner on the basis of the current SIB31(-NB) coding or in a beam/cell-related manner based on the preceding embodiment. The specific coding of the time span in question might be realized in the same way as for the time remaining until a change between S&F mode and real-time mode (RT) or vice-versa takes place.

The following ASN.1 syntax of SIB31(-NB) shows embedding into the syntax the storage status information.

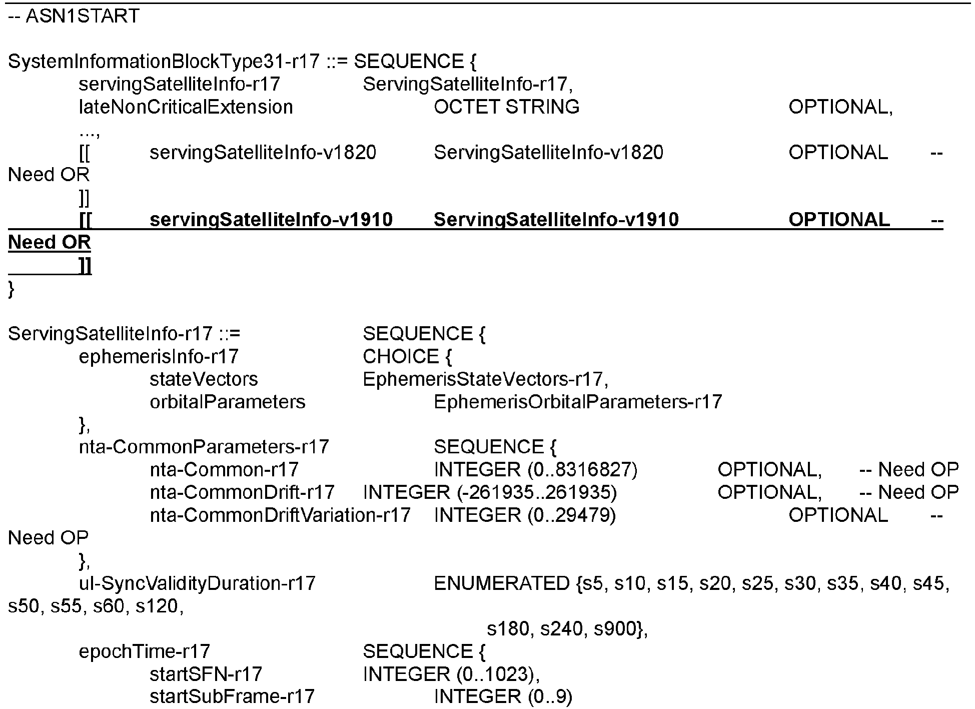

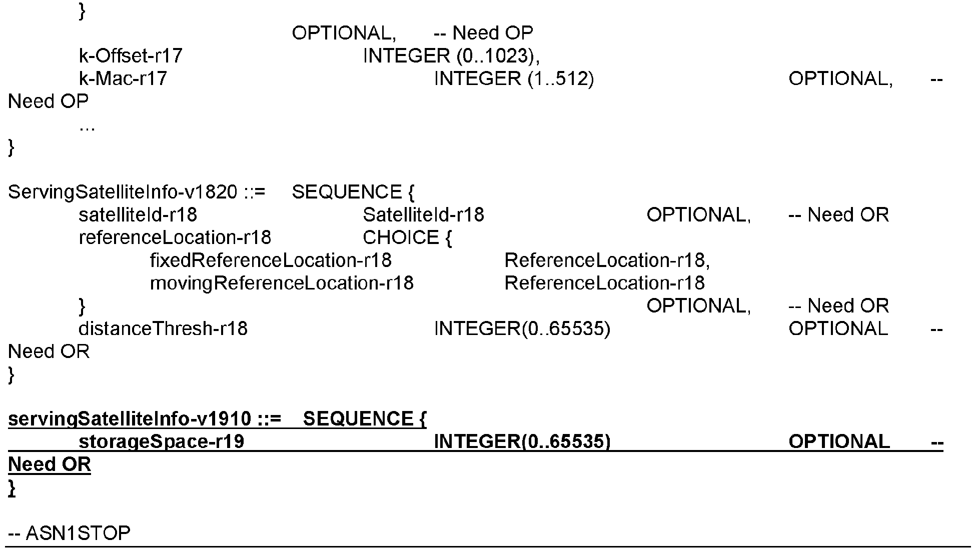

Specifically, the system information now includes an information container servingSatellitelnfo-v1910 with an information element storageSpace-r19. The corresponding semantics is provided in the following table.

| ***SystemInformationBlockType31* field descriptions** |
|---|
| ***distance Thresh*** |
| Distance from the serving cell reference location and is used in location-based measurement initiation in RRC_IDLE (as specified in TS 36.304 [4]) and RRC_CONNECTED. Each step represents 50m. |
| ***epochTime*** |
| Epoch time of the satellite ephemeris data and common TA parameters, see TS 36.213 [23]. |
| This field also indicates the epoch time for the reference location of Earth moving cells if present. |
| The reference point for epoch time of the serving satellite ephemeris and Common TA parameters is the uplink time synchronization reference point of the serving cell. |
| *epochTime* is the starting time of a DL subframe indicated by *startSFN* and *start Subframe.* For serving cell, the *startSFN* indicates the current SFN or the next upcoming SFN after the frame where the message indicating the *epochTime* is received. |
| If the field is absent, the epoch time is the starting time of the DL subframe corresponding to the end of the SI window during which the SI message carrying SIB31 (-NB) is transmitted. E-UTRAN always includes *epochTime* when SIB31(-NB) is provided through dedicated signalling. |
| In case of handover or conditional handover, this field is based on the timing of the target cell, i.e. the *startSFN* and *startSubFrame* number indicated in this field refers to the SFN and sub-frame of the target cell, and UE considers the target cell epoch time (indicated by the *startSFN* and *startSubFrame* in this field) to be the frame nearest to the frame where *RRCConnectionReconfiguration* message is received. In case of handover or conditional handover, the reference point for epoch time of the target NTN payload ephemeris and Common TA parameters is the uplink time synchronization reference point of the target cell. |
| ***k-Mac*** |
| Scheduling offset used when downlink and uplink frame timing are not aligned at the eNB, see TS 36.213 [23]. Unit in ms. |
| If the field if absent, the UE uses the (default) value of 0. |
| ***k-Offset*** |
| Scheduling offset used in the timing relationships in NTN, see TS 36.213 [23]. Unit in ms. |
| ***nta-Common*** |
| Network-controlled common TA, see TS 36.213 [23]. Unit of µs. |
| Step of 32.55208 ×10⁻³ µs. Actual value = field value * 32.55208 ×10⁻³. |
| If the field is absent, the UE uses the (default) value of 0. |
| ***nta-CommonDrift*** |
| Drift rate of the common TA, see TS 36.213 [23]. Unit of µs/s. |
| Step of 0.2 ×10⁻³ µs/s. Actual value = field value * 0.2 ×10⁻³. |
| If the field is absent, the UE uses the (default) value of 0. |
| ***nta-CommonDriftVariation*** |
| Drift rate variation of the common TA, see TS 36.213 [23]. Unit of µs/s². |
| Step of 0.2 ×10⁻⁴ µs/s². Actual value = field value * 0.2 ×10⁻⁴. |
| If the field is absent, the UE uses the (default) value of 0. |
| ***orbitalParameters*** |
| Instantaneous values of the satellite orbital parameters. The signalled values are valid at least for the duration as defined by *ul-SyncValidityDuration* and *epochTime.* |
| ***referenceLocation*** |
| Reference location of the NTN (quasi-)Earth fixed cell or Earth moving cell, used in location-based measurement initiation in RRC_IDLE (as specified in TS 36.304 [4]) and RRC_CONNECTED if *distanceThresh* is also configured. If configured by an Earth moving cell, the broadcast reference location corresponds to the epoch time and is also used in the evaluation of Event D2 and CondEvent D2, and the UE derives the real-time reference location based on the serving satellite ephemeris, see TS 36.304 [4]. |
| ***stateVectors*** |
| Instantaneous values of the satellite state vectors. The signalled values are valid at least for the duration as defined by *ul-SyncValidityDuration* and *epochTime.* |
| ***storageSpace*** |
| Remaining storage space per UE aboard the satellite. Indication in Megabytes (MB) |
| ***ul-SyncValidityDuration*** |
| Validity duration of the satellite ephemeris data and common TA parameters, i.e. maximum time duration (from *epochTime)* during which the UE can apply the satellite ephemeris without acquiring new satellite ephemeris, see TS 36.213 [23]. Unit in second. |
| Value *s5* corresponds to 5 seconds, value *s10* corresponds to 10 seconds and so on. The *ul-SyncValidityDuration* is only updated when at least one of *epochTime, nta-CommonParameters, ephemerisInfo* is updated. |

In summary, the network indicates to the UE information on the remaining storage space per UE aboard the satellite (or group of interlinked satellites). Indication of remaining storage space is relevant in a Store & Forward type of communication environment, i.e. an environment that can structurally neither guarantee unlimited storage space like it is the case in a terrestrial communication environment nor permanent real-time mode, i.e. permanent presence of feeder and service links. A typical example for such a non-real-time communication environment is a satellite/UAV/HAPS network of non-geostationary satellites/UAVs/HAPSs being spread over orbits/routes in a non-dense manner leading to non-overlapping, intermittent coverage on the ground. Remaining storage space is the amount of memory still available aboard the specific satellite/UAV/HAPS divided by the UEs expected to access it, e.g. 1 GB remaining in total and 1000 UEs expected means 1 MB per UE remaining. Remaining storage space might depend on the particular satellite/UAV/HAPS, the remaining time until the particular satellite/UAV/HAPS reaches the lock-in range of the next relevant gateway on the ground and possibly the tariffs offered by the network provider, i.e. higher tariffs might be connected to more storage space made available, lower tariffs are connected to less storage space.

Remaining storage space is directly connected to the number of UEs wanting to access that memory range. That number is to be estimated by the network (base station or a core network entity).

UEs are enabled to recognize the remaining storage space being available aboard to particular satellite (identified by its satelliteld). UEs should follow the given restrictions in terms of acceptable amount of data that is permitted for upload. Not obeying the restrictions might lead to non-storage of the data on board the satellite/eNB.

Regarding benefits, in the situation when storage space aboard the satellite becomes scarce, information about available remaining storage space per UE would enable all UEs that want/need to upload data to keep the limit in mind and - if necessary due to allowed amount of data is smaller than data set available on UE side - restrict the amount of data being transferred to the satellite in a smart manner (e.g. lower resolution, lower sampling rate etc.). In the worst case, the UE could refrain from uploading data completely, e.g. if no proper subset can be formed.

The absence of the information about remaining storage space would lead to a hard blockage for all or part of the UEs, which is equivalent to a completely unreliable service quality. In the context of 3GPP, according to the detailed example provided above, SIB31(-NB) provides the information about the serving satellite. The indication of remaining storage space finds its place in SIB31(-NB) - in a satellite-related manner on the basis of the current SIB31(-NB) coding. The specific coding of the storageSpace in question might be realized with a granularity of 1 MB and a range of up to 65,535 MB. However, other solutions (ranges and granularities) are possible.

Corresponding to the communication device, there is a base station provided which is capable of transmitting to the UEs the delivery time information and/or the storage status. The base station may have the same general structure as base station 210 shown in Fig. 12. In particular, the base station 210 comprises a transceiver 240 that transmits the system information. Moreover, the base station 210 comprises circuitry 520 shown in Fig. 15, which replaces the circuitry 220 of Fig. 12.

The circuitry 520 is configured to generate system information for a predetermined illumination area. The system information comprises at least one of:
- a delivery time information indicating a time interval that includes at least time required until data transmitted from the communication device via the base station are conveyed to a gateway, and
- a storage status information indicating capacity available in a storage of the base station for storing the data from the communication device.

For this purpose, the circuitry 520 comprises a module 522 for providing (determining) the delivery time and the storage status as already described above. For example, the circuitry 520 (module 522) estimates the capacity available in a storage of the base station based on the number of communication devices. For example, the BS determines the number of UEs to be served until data can be transferred to the network (e.g. until a gateway is met, i.e. illuminated by the base station). The BS determines its own storage capacity for storing the UE data (in uplink). Then, the BS divides the own storage capacity with the number of the UEs.

In some applications, different UEs may collect data for various applications and the data may vary in size, respectively. Moreover, some data may have a higher priority than other data. Correspondingly, according to an exemplary implementation, the capacity available in a storage of the base station may be estimated based further on a priority of the respective communication devices to be served until connection to the gateway is available. For instance, the BS determines the number of UEs to be served until data can be transferred to the network (e.g. until a gateway is met, i.e. illuminated by the base station), as well as a priority of that UEs. The BS determines its own storage capacity for storing the UE data (in uplink). Then, the BS divides the own storage capacity with the number of the UEs multiplied by their respective priorities. The system information may correspondingly indicate the storage status information per UE priority or the system information may indicate the storage status information only per UE with the lowest priority, but UEs are configured to obtain the storage status for their own priority by multiplying the lowest-priority status amount. These are only examples and the present disclosure is not limited by any specific way of signalling the storage status information.

As mentioned above, the base station 210 may be born by a non-geostationary satellite. As also already mentioned in the first embodiment (beam-level signaling), the present disclosure is particularly advantageous for S& F operation which may be summarized as follows:
The circuitry, in operation:
- causes the transceiver to receive data from a communication device located in one of two or more beam-level areas associated with the respective beam-level information and store the data in the storage, and
- when a connection to the terrestrial node of the NTN becomes available, causes the transceiver to transmit the data to the terrestrial node of the NTN;
   and/or
- when a connection to the terrestrial node of the NTN becomes available, causes the transceiver to receive data for a communication device from a terrestrial node of the NTN and stores the data in the storage, and
- causes the transceiver to transmit the data to the communication device when the communication device is located in one of two or more beam-level areas associated with the respective beam-level information.

Moreover, as discussed with regard to the first embodiment, the base station may be configured to transmit the system information by a network node. Thus, a network node is also provided for communication with a base station, BS, of a non-terrestrial network, NTN. The network node comprises a circuitry and a transceiver. The circuitry, in operation generates, system information, the system information comprising at least one of: a delivery time information indicating a time interval that includes at least time required until data transmitted from the communication device via the base station are conveyed to a gateway, and a storage status information indicating capacity available in a storage of the base station for storing the data from the communication device. The transceiver, in operation, transmits the system information to the base station. Moreover, the features of the system information described with referee to the communication device (UE) and the base station also apply to the network node.

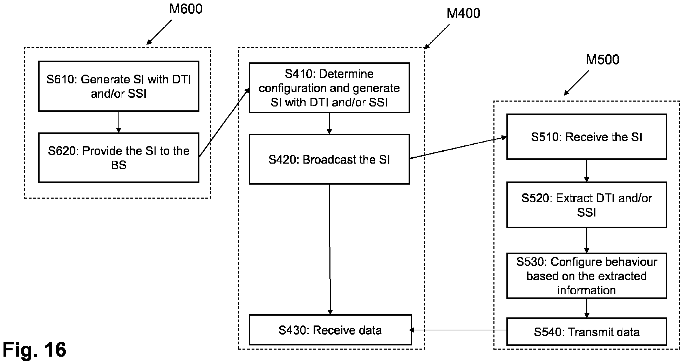

Furthermore, corresponding methods are provided that may be performed at the communication device, the base station and the network node. These methods are illustrated in Fig. 16.

A method M400 may be performed, for example at a base station such as an eNB or gNB, born on a vehicle as described above. The method comprises a step S410 of generating system information including a delivery time information (DTI) and/or a storage status information (SSI) as described above. In step S420, the system information is transmitted, e.g. broadcast.

The broadcast information may be received by one or more communication devices. Correspondingly the one or more communication devices may perform a method M500 for communication with a non-terrestrial network, NTN. Such method is also illustrated in Fig. 14. The method comprises a step S510 of receiving a system information from a base station, BS, of the NTN. After receiving S510, the method comprises a step of extracting from the system information for a predetermined illumination area, at least one of the delivery time information and the storage status information as described above.

The received and extracted beam-level information is the further used to configure behavior at the side of the communication device in step S530. In particular, this may comprise controlling transmission of the data from the communication device to the base station according to the extracted delivery time information and/or the storage status information. The transmission is performed in step S540.

As mentioned above, the system information does not have to originate from the base station. Rather, a network entity (network function, network node) may configure the base station with the data. In other words, in some systems, at least a part of system information is configured by a network node. Correspondingly, Fig. 14 shows a method M600 that can be performed at a network node (e.g. a gateway or a server, or any one or more core network entities). M600 is a method for communication with a base station, BS, of a non-terrestrial network, NTN. Accordingly, the method comprises a step S610 of generating, system information including the DTI and/or the SSi as they are described above. The system information may be a part of the system information actually broadcast by the base station in S420. In step S620, the system information is transmitted to the base station. The base station may use the information in step S410 when generating the system information to be broadcast in step S420. In particular, the generating S410 of the system information includes determining of the configuration that is to be broadcast. This determination may be performed by receiving the configuration from the network node and/or by configuring transmission parameters by the base station e.g. by determining own location, timing and the like.

### Combinations of embodiments

Above, two embodiments were described: in the first embodiment, a beam-level information was included into the system information. In the second embodiments, the delivery time information and/or the storage status have been included into the system information.

These embodiments are combinable.

One possibility is to provide system information signalling that comprises beam-level information according to embodiment 1 and providing delivery time and/or storage status according to embodiment 2 e.g. on BS-level.

Another possibility is to provide system information signalling that comprises beam-level information according to embodiment 1 and providing delivery time and/or storage status according to embodiment 2 e.g. on beam-level.

Further variations are possible such as providing storage status information only on BS level, but providing delivery time information on beam level or vice versa.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Summary of embodiments

Following clauses representing some possible implementations are provided according to a first embodiment:
Clause 1: A communication device for communication with a non-terrestrial network, NTN, the communication device comprising: a transceiver which, in operation, receives a system information from a base station, BS, of the NTN; circuitry which, in operation extracts, from the system information, a BS-level information associated with an identification of the base station, wherein the BS-level information comprises two or more beam-level information elements, and each beam-level information element is associated with an identification of a respective beam-level area illuminated by one beam or by an aggregation of beams smaller than an area illuminable by the base station.
Clause 2: The communication device according to Clause 1, wherein the beam-level information comprises information of a footprint of the respective beam-level area.
Clause 3: The communication device according to Clause 2, wherein the system information comprises time instance information associated with the footprint of the respective beam-level area.
Clause 4: The communication device according to Clause 3, wherein the circuitry, in operation, determines a status of the beam-based area based on said footprint and/or said time instance information and based on an own location of the communication device, the status of the beam-level area includes at least one of: whether and/or when the beam-level area will coincide with the communication device, duration of coverage of the communication device by the beam-level area, and whether the beam-level area has attributes matching requirements of the communication device for uploading data.
Clause 5: The communication device according to Clause 4, wherein the circuitry, in operation, determines to remain in a mode of a reduced energy consumption or to wake up based on said status of the beam-based area.
Clause 6: The communication device according to any of Clauses 1 to 5, wherein the beam-level information comprises location-based measurement information on a reference point, and the system information comprises a distance threshold for determining, in a condition for measurement triggering, whether the own location of the communication device is farther from the reference point than the distance threshold.
Clause 7: The communication device according to Clauses 6, wherein the circuitry, in operation: evaluates the condition for measurement triggering including determining whether the own location of the communication device is farther from the reference point than the distance threshold, and in case said condition is satisfied, starts a search for a next illumination area.
Clause 8: The communication device according to any of Clauses 1 to 7, wherein the BS-level information includes the identification of the base station, and/or the beam-level information includes the identification of the respective beam-level area.
Clause 9: The communication device according to any of Clauses 1 to 8, wherein the processing circuitry, in operation, extracts from the system information for a predetermined illumination area, at least one of: a delivery time information indicating a time interval that includes at least time required until data transmitted from the communication device via the base station are conveyed to a terrestrial gateway, and a storage status information indicating capacity available in a storage of the base station for storing the data from the communication device; and controls the transceiver regarding the transmission of the data from the communication device to the base station according to the extracted delivery time information and/or the storage status information.
Clause 10: A base station, BS, for a non-terrestrial network, NTN, the base station comprising: circuitry which, in operation generates, system information including a BS-level information associated with an identification of the base station, wherein the BS-level information comprises two or more beam-level information elements, and each beam-level information element is associated with an identification of a respective beam-level area illuminated by one beam or by an aggregation of beams smaller than an area illuminable by the base station; and a transceiver which, in operation, transmits the system information.
Clause 11: The base station according to Clause 10, wherein The BS-level information includes a plurality of beam-level areas, and the processing circuitry, in operation, illuminates the beam-level areas by time-domain hopping between the plurality of beam-level areas.
Clause 12: The base station according to Clause 10 or 11, born by a non-geostationary satellite and configured to perform store and forward operation.
Clause 13: A network node for communication with a base station, BS, of a non-terrestrial network, NTN, the network node comprising: circuitry which, in operation generates, system information including a BS-level information associated with an identification of the base station, wherein the BS-level information comprises two or more beam-level information elements, and each beam-level information element is associated with an identification of a respective beam-level area illuminated by one beam or by an aggregation of beams smaller than an area illuminable by the base station; and a transceiver which, in operation, transmits the system information to the base station.
Clause 14.A method for communication with a non-terrestrial network, NTN, the method comprising: receiving a system information from a base station, BS, of the NTN; extracting, from the system information, a BS-level information associated with an identification of the base station, wherein the BS-level information comprises two or more beam-level information elements, and each beam-level information element is associated with an identification of a respective beam-level area illuminated by one beam or by an aggregation of beams smaller than an area illuminable by the base station.
Clause 15: A method for a non-terrestrial network, NTN, the method comprising: generating system information including a BS-level information associated with an identification of the base station, wherein the BS-level information comprises two or more beam-level information elements, and each beam-level information element is associated with an identification of a respective beam-level area illuminated by one beam or by an aggregation of beams smaller than an area illuminable by the base station; and transmitting the system information.

According to a second embodiment, the following clauses representing some exemplary implementations are provided:
Clause 1: A communication device for communication with a non-terrestrial network, NTN, the communication device comprising: a transceiver which, in operation, receives a system information from a base station, of the NTN; circuitry which, in operation: extracts, from the system information for a predetermined illumination area, at least one of: a delivery time information indicating a time interval that includes at least time required until data transmitted from the communication device via the base station are conveyed to a terrestrial gateway, and a storage status information indicating capacity available in a storage of the base station for storing the data from the communication device; and controls the transceiver regarding the transmission of the data from the communication device to the base station according to the extracted delivery time information and/or the storage status information.
Clause 2: The communication device according to Clause 1, wherein said time interval accumulates: time for transmitting the data from the communication device to the base station which includes time until which the communication device is illuminated from the base station, time for transmitting the data from the base station to the gateway which includes time until which connection of the base station to the gateway is available, and/or time for transmitting the data from the gateway to an application server.
Clause 3: The communication according to Clause 1 or 2, wherein the base station is born by non-terrestrial vehicle and operates in a store and forward mode, and said time interval includes the time during which the base station passes between an illumination area illuminating said terrestrial gateway and an illumination area illuminating said communication device.
Clause 3: The communication device according to Clause 1 or 2, wherein the circuitry, in operation, evaluates whether the amount of said data to be transmitted exceeds the capacity available in the storage, if the amount of said data to be transmitted does not exceed the capacity available in the storage, controls the transceiver to transmit the data to the base station.
Clause 4: The communication device according to Clause 3, wherein the circuitry, in operation, if the amount of said data to be transmitted exceeds the capacity available in the storage, controls the transceiver to: skip transmitting the data to the base station, or generate reduced data based on said data and transmit the reduced data to the base station, wherein the amount of the reduce data is smaller than or equal to the capacity available in the storage.
Clause 5: The communication device according to any of Clauses 1 to 4, wherein the circuitry, in operation: evaluates whether the time interval indicated in the delivery time information exceeds a predefined requirement or an application to which the data is pertaining, and if the time interval does not exceed the predefined requirement, controls the transceiver to transmit the data to the base station.
Clause 6: The communication device according to Clause 5, wherein the circuitry, in operation, if the time interval exceeds the predefined requirement, controls the transceiver to skip transmitting the data to the base station.
Clause 7: The communication device according to any of Clauses 1 to 6, wherein the circuitry, in operation: evaluates, for each of a plurality of predetermined illumination areas, the time interval indicated in the delivery time information, wherein the time interval is further associated with a respective tariff, selects a predetermined illumination area based on the time interval and the respective associated tariff, and controls the transceiver to transmitting the data to the base station illuminating said selected predetermined illumination area.
Clause 8: The communication device according to any of claim Clauses 1 to 7, wherein the delivery time information and/or the storage status information are included within SIB31(-NB) of a 3GPP standard.
Clause 9: The communication device according to any of Clauses 1 to 8, wherein the communication device is an NTN Internet of Things, loT, and the predetermined illumination area is a beam or an aggregation of beams illuminated by the base station.
Clause 10: A base station for a non-terrestrial network, NTN, the base station comprising: circuitry which, in operation generates, system information for a predetermined illumination area, the system information comprising at least one of: a delivery time information indicating a time interval that includes at least time required until data transmitted from the communication device via the base station are conveyed to a gateway, and a storage status information indicating capacity available in a storage of the base station for storing the data from the communication device; and a transceiver that, in operation, transmits the system information.
Clause 11: The base station according to Clause 10, wherein the processing circuitry, in operation, estimates the capacity available in a storage of the base station based on the number of communication devices and/or based on the priority of the respective communication devices to be served until connection to a gateway is available.
Clause 12. The base station according to Clauses 10 or 11, born by a non-geostationary satellite.
Clause 13: A network node for communication with a base station, BS, of a non-terrestrial network, NTN, the network node comprising: circuitry which, in operation generates, system information, the system information comprising at least one of: a delivery time information indicating a time interval that includes at least time required until data transmitted from the communication device via the base station are conveyed to a gateway, and a storage status information indicating capacity available in a storage of the base station for storing the data from the communication device; and a transceiver which, in operation, transmits the system information to the base station.
Clause 14: A method for communication with a non-terrestrial network, NTN, the method comprising: receiving a system information from a base station, of the NTN; extracting, from the system information for a predetermined illumination area, at least one of: a delivery time information indicating a time interval that includes at least time required until data transmitted from the communication device via the base station are conveyed to a terrestrial gateway, and a storage status information indicating capacity available in a storage of the base station for storing the data from the communication device; and controlling transmission of the data from the communication device to the base station according to the extracted delivery time information and/or the storage status information.
Clause 15: A method for a non-terrestrial network, NTN, the method comprising: generating, system information for a predetermined illumination area, the system information comprising at least one of: a delivery time information indicating a time interval that includes at least time required until data transmitted from the communication device via the base station are conveyed to a gateway, and a storage status information indicating capacity available in a storage of the base station for storing the data from the communication device; and transmitting the system information.

It is noted that the base stations and network nodes (Embodiment 1 and/or 2) may implement clauses related to contents of the system information dependent on clause 1 of the respective embodiment 1 or 2, correspondingly.

Moreover, the first and the second embodiments are combinable. For example, the communication device according to any of Clauses 1 to 8 of the first embodiment are provided, wherein the processing circuitry, in operation, performed according to Clause 1 of the second embodiment, namely: extracts from the system information for a predetermined illumination area, at least one of: a delivery time information indicating a time interval that includes at least time required until data transmitted from the communication device via the base station are conveyed to a terrestrial gateway, and a storage status information indicating capacity available in a storage of the base station for storing the data from the communication device; and controls the transceiver regarding the transmission of the data from the communication device to the base station according to the extracted delivery time information and/or the storage status information. Moreover, any further clauses of the second embodiment are applicable that depend on Clause 1 of the second embodiment.

The above described circuitry of the communication device (embodiment 1 and/or embodiment 2) may be implemented on an integrated circuit, IC.

The above described circuitry of the base station (embodiment 1 and/or embodiment 2) may be implemented on an integrated circuit, IC.

The above described circuitry of the network node (embodiment 1 and/or embodiment 2) may be implemented on an integrated circuit, IC.

In addition to the above mentioned methods, methods that corresponds to steps performed by the circuitry of the above communication device (embodiment 1 and/or embodiment 2) are provided. The methods may also include steps performed by the transceiver of the communication device.

In addition to the above mentioned methods, methods that corresponds to steps performed by the circuitry of the above base station (embodiment 1 and/or embodiment 2) are provided. The methods may also include steps performed by the transceiver of the base station.

In addition to the above mentioned methods, methods that corresponds to steps performed by the circuitry of the above network node (embodiment 1 and/or embodiment 2) are provided. The methods may also include steps performed by the transceiver of the network node.

Moreover, a program is provided, stored on a non-transitory medium and comprising code instructions which, when executed on one or more processors, cause the one or more processors to execute any one of the above mentioned methods (of embodiment a and/or embodiment 2).

## Claims

1. A communication device for communication with a non-terrestrial network, NTN, the communication device comprising:
a transceiver which, in operation, receives a system information from a base station, of the NTN;
circuitry which, in operation:
extracts, from the system information for a predetermined illumination area, at least one of:
- a delivery time information indicating a time interval that includes at least time required until data transmitted from the communication device via the base station are conveyed to a terrestrial gateway, and
- a storage status information indicating capacity available in a storage of the base station for storing the data from the communication device; and
controls the transceiver regarding the transmission of the data from the communication device to the base station according to the extracted delivery time information and/or the storage status information.

2. The communication device according to claim 1, wherein said time interval accumulates:
time for transmitting the data from the communication device to the base station which includes time until which the communication device is illuminated from the base station,
time for transmitting the data from the base station to the gateway which includes time until which connection of the base station to the gateway is available, and/or
time for transmitting the data from the gateway to an application server.

3. The communication according to claim 1 or 2, wherein
the base station is born by non-terrestrial vehicle and operates in a store and forward mode, and
said time interval includes the time during which the base station passes between an illumination area illuminating said terrestrial gateway and an illumination area illuminating said communication device.

4. The communication device according to claim 1 or 2, wherein
the circuitry, in operation, evaluates whether the amount of said data to be transmitted exceeds the capacity available in the storage,
if the amount of said data to be transmitted does not exceed the capacity available in the storage, controls the transceiver to transmit the data to the base station.

5. The communication device according to claim 4, wherein
the circuitry, in operation, if the amount of said data to be transmitted exceeds the capacity available in the storage, controls the transceiver to:
- skip transmitting the data to the base station, or
- generate reduced data based on said data and transmit the reduced data to the base station, wherein the amount of the reduce data is smaller than or equal to the capacity available in the storage.

6. The communication device according to any of claims 1 to 5, wherein the circuitry, in operation:
evaluates whether the time interval indicated in the delivery time information exceeds a predefined requirement or an application to which the data is pertaining, and
if the time interval does not exceed the predefined requirement, controls the transceiver to transmit the data to the base station.

7. The communication device according to claims 6, wherein the circuitry, in operation, if the time interval exceeds the predefined requirement, controls the transceiver to skip transmitting the data to the base station.

8. The communication device according to any of claims 1 to 7, wherein the circuitry, in operation:
evaluates, for each of a plurality of predetermined illumination areas, the time interval indicated in the delivery time information, wherein the time interval is further associated with a respective tariff,
selects a predetermined illumination area based on the time interval and the respective associated tariff, and
controls the transceiver to transmitting the data to the base station illuminating said selected predetermined illumination area.

9. The communication device according to any of claims 1 to 8, wherein the delivery time information and/or the storage status information are included within SIB31(-NB) of a 3GPP standard.

10. The communication device according to any of claims 1 to 9, wherein the communication device is an NTN Internet of Things, loT, and the predetermined illumination area is a beam or an aggregation of beams illuminated by the base station.

11. A base station for a non-terrestrial network, NTN, the base station comprising:
circuitry which, in operation generates, system information for a predetermined illumination area, the system information comprising at least one of:
- a delivery time information indicating a time interval that includes at least time required until data transmitted from the communication device via the base station are conveyed to a gateway, and
- a storage status information indicating capacity available in a storage of the base station for storing the data from the communication device; and
a transceiver that, in operation, transmits the system information.

12. The base station according to claim 11, wherein the processing circuitry, in operation, estimates the capacity available in a storage of the base station based on the number of communication devices and/or based on the priority of the respective communication devices to be served until connection to a gateway is available.

13. A network node for communication with a base station, BS, of a non-terrestrial network, NTN, the network node comprising:
circuitry which, in operation generates, system information, the system information comprising at least one of:
- a delivery time information indicating a time interval that includes at least time required until data transmitted from the communication device via the base station are conveyed to a gateway, and
- a storage status information indicating capacity available in a storage of the base station for storing the data from the communication device; and
a transceiver which, in operation, transmits the system information to the base station.

14. A method for communication with a non-terrestrial network, NTN, the method comprising:
receiving a system information from a base station, of the NTN;
extracting, from the system information for a predetermined illumination area, at least one of:
- a delivery time information indicating a time interval that includes at least time required until data transmitted from the communication device via the base station are conveyed to a terrestrial gateway, and
- a storage status information indicating capacity available in a storage of the base station for storing the data from the communication device; and
controlling transmission of the data from the communication device to the base station according to the extracted delivery time information and/or the storage status information.

15. A method for a non-terrestrial network, NTN, the method comprising:
generating, system information for a predetermined illumination area, the system information comprising at least one of:
- a delivery time information indicating a time interval that includes at least time required until data transmitted from the communication device via the base station are conveyed to a gateway, and
- a storage status information indicating capacity available in a storage of the base station for storing the data from the communication device; and
transmitting the system information.
